# EUROPEAN PATENT SPECIFICATION

(11) **EP 3 907 619 B1**
(45) Date of publication and mention of the grant of the patent: **11.01.2023**
(21) Application number: 21169686.9
(22) Date of filing: 21.04.2021
(51) Int. Cl.: G06F 11/34, G06F 9/50

(54) **NOSQL DATABASE CAPACITY CONFIGURATION OPTIMIZATION SYSTEM FOR CLOUD COMPUTING**
SYSTEM ZUR OPTIMIERUNG DER NOSQL-DATENBANK-KAPAZITÄTSKONFIGURATION VON NOSQL FÜR CLOUD-COMPUTING
SYSTÈME D'OPTIMISATION DE LA CONFIGURATION DE LA CAPACITÉ D'UNE BASE DE DONNÉES NOSQL POUR L'INFORMATIQUE EN NUAGE

(30) Priority: 04.05.2020 IN 202041018931; 15.06.2020 US 202016901861
(43) Date of publication of application: 10.11.2021
(73) Proprietor: Accenture Global Solutions Limited, Dublin 4 (IE)
(72) Inventor: SRINIVASAN, Madhan Kumar, 560035 Bangalore (IN); GAJULA, Kishore Kumar, 500089 Telangana (IN)
(74) Representative: Boult Wade Tennant LLP

(56) References cited:
- EP-A1- 3 495 952
- US-A1- 2016 321 588
- US-B1- 10 191 778

## Description

### RELATED APPLICATION

This application claims priority to Indian Provisional Patent Application No. 202041018931, entitled "NOSQL DATABASE CAPACITY CONFIGURATION OPTIMIZATION SYSTEM FOR CLOUD COMPUTING" filed on May 4, 2020, and to US Non-Provisional Patent Application No. 16/901,861 filed on 15 June 2020.

### Technical Field

This disclosure relates to capacity configuration optimization in NoSQL database cloud computing using a NoSQL database capacity configuration optimization system.

### Background

Rapid advances in communications and storage technologies, driven by immense customer demand, have resulted in widespread adoption of cloud systems for managing large data payloads, distributed computing, and record systems. As one example, modern enterprise systems, for example those relying on object storage architectures, presently maintain data records many petabytes in size in the cloud. Improvements in tools for cloud resource allocation, utilization, and consumption prediction will further enhance the capabilities of cloud computing systems.

US10191778 discusses methods, systems, and apparatus, including computer program products, for managing resources in container systems, including multi-cloud systems. US2016/0321588 discusses architecture that enables a Database-as-a-Service (DaaS) to auto-scale container sizes on behalf of tenants. EP3495952 discusses a multi-layer committed compute reservation stack that may generate prescriptive reservation matrices for controlling static reservation for computing resources.

### Summary

This disclosure relates to systems and methods for optimizing processing capacity configuration such as capacity mode and capacity throughput of a database container. Such a database container may be commissioned by a user, such as business organization, for NoSQL database cloud-based computing architectures to process the user's data. The invention is defined in detail in the appended independent claims, whereas preferred embodiments of the invention are defined in the appended dependent claims.

In one embodiment, a system for optimizing the processing capacity configuration for the user of the database container in a NoSQL database is disclosed. The system includes a network interface circuitry and an optimization circuitry in data communication with the network interface circuitry. The network interface circuitry is configured to receive utilization tracking data for a database container configured with a processing capacity configuration. The processing capacity configuration includes one of a plurality of capacity modes. Each capacity mode represents a manner to provision processing capacity on the database container. The network interface circuitry is configured to send a capacity configuration optimization (CCO) token to a host interface. The host interface is configured to execute the CCO token to reconfigure the database container with a recommended capacity mode.

The optimization circuitry is configured to execute a CCO stack. At a prescriptive engine layer of the CCO stack, the CCO stack is executable to obtain capacity utilization data from the utilization tracking data; aggregate the capacity utilization data based on a predetermined time granularity; for each of subintervals having the predetermined time granularity over a CCO interval, predict, based on the aggregated capacity utilization data, respective prediction-based processing capacity utilizations for the database container with a prediction engine; determine a target processing capacity utilization value from the prediction-based processing capacity utilizations; calculate respective provisioned processing capacity utilizations for each of the subintervals over the CCO interval based on the target processing capacity utilization value; select one of the capacity modes as the recommended capacity mode based on the prediction-based processing capacity utilizations and the provisioned processing capacity utilizations; generate the CCO token based on the recommended capacity mode; and send the CCO token to the host interface via the network interface circuitry.

In another embodiment, a method for optimizing the processing capacity configuration for the user of a database container is disclosed. The method includes, at network interface circuitry, receiving utilization tracking data for a database container configured with a processing capacity configuration. The processing capacity configuration includes one of a plurality of capacity modes. The capacity mode represents a manner to provision processing capacity on the database container.

An optimization circuitry is in data communication with the network interface circuitry. The method executes a capacity configuration optimization (CCO) stack at the optimization circuitry, including, at a prescriptive engine layer of the CCO stack, obtaining capacity utilization data from the utilization tracking data; aggregating the capacity utilization data based on a predetermined time granularity; for each of a plurality of subintervals having the predetermined time granularity over a CCO interval, predicting based on the aggregated capacity utilization data, respective prediction-based processing capacity utilizations for the database container with a prediction engine; determining a target processing capacity utilization value from the prediction-based processing capacity utilizations; calculating respective provisioned processing capacity utilizations for each of the subintervals over the CCO interval based on the target processing capacity utilization value; evaluating a consumption metric of the database container based on the prediction-based processing capacity utilizations and the provisioned processing capacity utilizations; selecting one of the plurality of capacity modes as a recommended capacity mode based on the consumption metric; generating, at the prescriptive engine layer, a CCO token based on the recommended capacity mode; and sending, via the network interface circuitry, the CCO token to a host interface configured to execute the CCO token to reconfigure the database container with the recommended capacity mode.

In another embodiment, a product for optimizing the processing capacity configuration for a user of a database container is disclosed. The product includes instructions stored on a machine-readable medium and may include machine-readable media other than a transitory signal and instructions stored on the machine-readable media. The instructions are configured to, when executed, cause a machine to, at network interface circuitry, receive utilization tracking data for a database container configured with a processing capacity configuration. The processing capacity configuration includes one of a plurality of capacity modes. The capacity mode represents a different scaling of processing capacity on the database container.

An optimization circuitry is in data communication with the network interface circuitry. At the optimization circuitry executing a capacity configuration optimization (CCO) stack, the instructions are configured to, when executed, cause a machine to, at a prescriptive engine layer of the CCO stack, obtain capacity utilization data from the utilization tracking data; aggregate the capacity utilization data based on a predetermined time granularity; for each of a plurality of subintervals having the predetermined time granularity over a CCO interval, predict based on the aggregated capacity utilization data, respective prediction-based processing capacity utilizations for the database container with a prediction engine; determine a target processing capacity utilization value from the prediction-based processing capacity utilizations; calculate respective provisioned processing capacity utilizations for each of the subintervals over the CCO interval based on the target processing capacity utilization value; select one of the capacity modes as a recommended capacity mode based on the prediction-based processing capacity utilizations and the provisioned processing capacity utilizations; generate, at the prescriptive engine layer, a CCO token based on the recommended capacity mode; and send, via the network interface circuitry, the CCO token to a host interface configured to execute the CCO token to reconfigure the database container with the recommended capacity mode.

One interesting feature of the NoSQL database capacity configuration optimization system and method described below may be that it may select a proper capacity mode for the NoSQL database container such as a database table in its next operation time interval. The capacity mode may include an on-demand mode, a standard mode, an auto-scaling mode, and a reserved mode. For example, for the database table whose workloads are less predictable, the system may intend to select the on-demand mode. The standard mode may be desirable where the system determines that the database table has an expected utilization of provisioned processing capacity (or capacity). If the system determines that the database table has very predictable workloads for a longer period of time, e.g. one year, the reserved mode may be more proper. To select the proper capacity mode, for each subintervals within next operation time interval, the system may predict respective processing capacity utilizations of the database table with a deep-learning prediction engine. The predicted processing capacity utilizations may form a predicted utilization curve.

Then, the system evaluates the consumption metrics of the database table under respective capacity modes based on the predicted processing capacity utilizations.

Alternatively or additionally, another interesting feature of the system and method described below may be that it may present deeper insights into the distribution of the predicted processing capacity utilizations on the predicted utilization curve as opposed to, for example, simply taking the average of the predicted processing capacity utilizations. For example, in evaluating the consumption metrics, the system may leverage percentile calculation instead of average calculation. In this way, the evaluated consumption metric may be closer to the actual consumption metric.

The above embodiments and other aspects and alternatives of their implementations are explained in greater detail in the drawings, the descriptions, and the claims.

### Brief Description of the Drawings

The present disclosure may be better understood with reference to the following drawings and description. The components in the figures are not necessarily to scale. Moreover, in the figures, like-referenced numerals designate corresponding parts throughout the different views.
Figure 1 shows an example system for optimizing the processing capacity configuration of the database container in accordance with an embodiment.
Figure 2 shows an example multiple-layer processing capacity configuration optimization stack included in a system.
Figure 3 shows example processing capacity configuration optimization logic.
Figure 4 shows an example system execution implementation for a prescriptive engine layer of the processing capacity configuration optimization stack in accordance with an embodiment.
Figures 5A-5C show an example processing capacity configuration optimization control interface.
Figures 6A-6C show a second example processing capacity configuration optimization control interface.
Figure 7 shows an example interaction logic with a processing capacity configuration optimization control interface in accordance with an embodiment.
Figure 8 shows an example system execution environment for the processing capacity configuration optimization stack.

### Detailed Description

A NoSQL database may provide cloud computing services to a user such as a business organization, including data storage service and data processing service. The NoSQL database may handle larger volumes of rapidly changing unstructured data, for example, data generated from the cloud, mobile, social media and big data, than a relational (SQL) database with rows and tables. A database container for a NoSQL database may be a data storage and processing unit of the NoSQL database. The NoSQL database may include multiple database containers. The database containers of a NoSQL database may include, for example, a table.

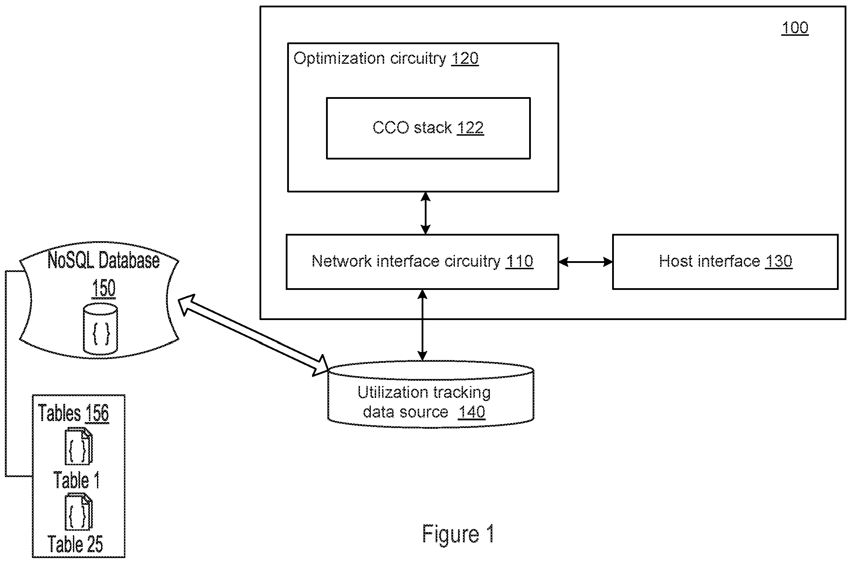

Figure 1 illustrates an example NoSQL database capacity configuration optimization system 100 for database container capacity configuration optimization in a NoSQL database. The system 100 includes a network interface circuitry 110, an optimization circuitry 120, and a host interface 130. The network interface circuitry 110 communicates with the optimization circuitry 120 and the host interface 130. The utilization tracking data source 140 may store the utilization tracking data of a NoSQL database such as the NoSQL database 150. The utilization tracking data may include, for example, historical capacity utilization data and storage utilization data of individual database containers. The NoSQL database includes one or more database containers.

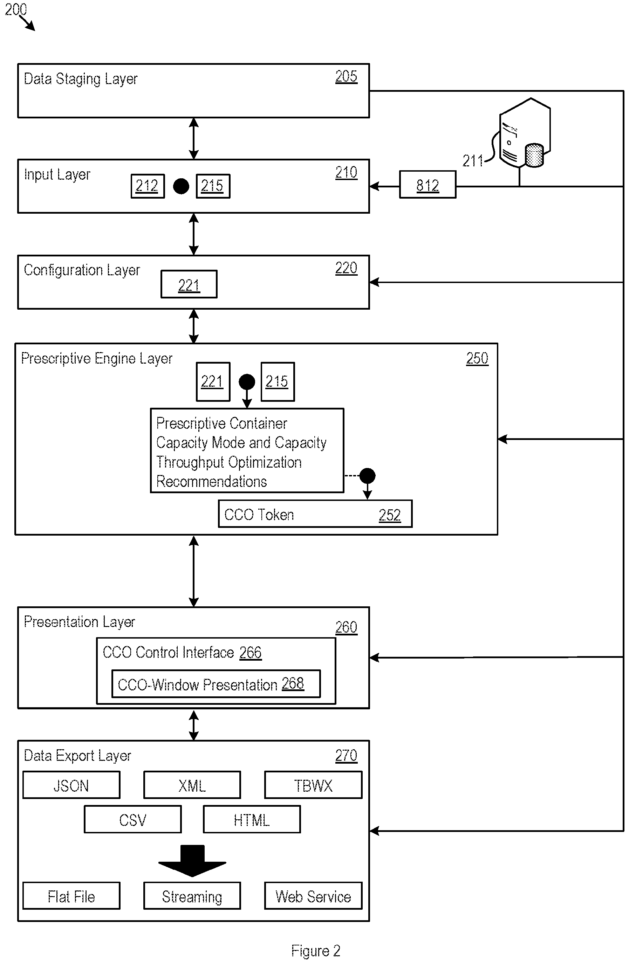

A database container (or container) may include, for example, a table. In an example, the NoSQL database 150 may include twenty-five tables 156 as illustrated in Figure 1. The network interface circuitry 110 may communicate with the utilization tracking data source 140 to receive utilization tracking data of, for example the tables 156 in the NoSQL database 150. The optimization circuitry 120 may execute the capacity configuration optimization (CCO) stack 122 to perform prescriptive analysis on the utilization tracking data of the database container to obtain a recommended processing capacity configuration. The functions of the CCO stack 122 will be described in detail later with reference to Figure 2. During execution of the CCO stack 122, the optimization circuitry 120 may generate a CCO token which may, for example, include a logic to reconfigure the database container with the recommended processing capacity configuration. The network interface circuitry 110 may send the CCO token to the host interface 130. The host interface 130 may, for example, include an Application Programming Interface (API) for reconfigure the processing capacity configuration for the database container and execute the CCO token with the API to accomplish the reconfiguration.

Herein, the processing capacity configuration (or capacity configuration) may include a capacity mode and a capacity throughput. The capacity mode may represent a manner to provision processing capacity on the database container. The capacity throughput may represent processing capacity provisioned on the database container to process data per unit time. Data processing operations by the database container may include, for example, read operations and write operations.

The capacity modes may include an on-demand mode, a standard mode, a reserved mode, and an auto-scaling mode. In the on-demand mode, the database may dynamically provide the database container with the capacity throughput based on the workloads of the database container. That said, the capacity throughput for the database container may increase/decrease with the workloads of the database container. In the standard mode, the database may provide the database container with a specified capacity throughput. In the reserved mode, the database may reserve a specified capacity throughput for the database container over at least a predetermined period of time. In the auto-scaling mode, the database may provide the database container with a specified capacity throughput and automatically increase/decrease the capacity throughput when some predetermined conditions are satisfied, for example, the consumption of the capacity throughput exceeds a consumption threshold.

AMAZON DynamoDB^{®} is a NoSQL database. Taking the DynamoDB as an example, the capacity throughput may include, for example, read capacity unit (RCU) and write capacity unit (WCU). In the DynamoDB, one read capacity unit may represent one read per second for a data item up to 4 KiloBytes (KB) in size. If the user needs to read a data item that is larger than 4 KB, the DynamoDB container may consume additional RCUs. The total number of RCUs required depends on the data item size. One write capacity unit may represent one write per second for a data item up to 1 KB in size. If the user needs to write a data item that is larger than 1 KB, the DynamoDB container must consume additional write capacity units. The total number of WCUs required depends on the data item size. Optionally, the capacity throughput may further include, for example, replicated write capacity unit, stream read request unit, and transactional read/write request unit. The replicated write capacity unit may represent the capacity provisioned on the database container to process write requests to multiple copies of the database container distributed in different physical locations, such as on different servers in different geographic regions. The stream read request unit may represent the capacity provisioned on the database container to process stream read requests. The transactional read/write request unit may represent the capacity provisioned on the database container to process transactional read/write requests. The transactional read/write requests differentiate from the standard read/write requests because all operations contained in a single transaction need to succeed or fail as an atomic operation.

In an example, when a user first activates DynamoDB data storage and processing services, DynamoDB may be configured for a capacity mode and capacity throughput for a DynamoDB container used by the user. In the beginning, the workloads of the DynamoDB container may not be predictable, and thus the capacity mode of the DynamoDB container may be set to the on-demand mode, under which the DynamoDB may provide the DynamoDB container with dynamic capacity throughput based on the actual workloads of the DynamoDB container. Over time, the workloads of the DynamoDB container may be predictable, for example, based on the historical capacity utilization data of the user. In this case, it may be desirable for the user to switch the capacity mode from the on-demand mode to another mode such as the standard mode or the reserved mode because the unit cost of the capacity throughput is different under various capacity modes. For example, the unit cost of the capacity throughputs, such as RCUs and WCUs, under the on-demand mode may be higher than the standard mode, and the unit cost of the capacity throughputs under the standard mode may be higher than the reserved mode. Where the DynamoDB container is switched from the on-demand mode to the standard mode, the DynamoDB may provision the user's DynamoDB container with the same processing capacity, i.e. the same capacity throughput, with less cost.

The NoSQL database capacity configuration optimization system 100 described herein enables users to optimize the capacity mode, for example, by predicting the capacity throughputs to be consumed by the user based on the historical capacity utilization data of the user and select the proper capacity mode based on the prediction. In this way, the system 100 may reduce the user's maintenance cost of the DynamoDB container without compromising the performance of data storage and processing services provided by the DynamoDB.

Referring to Figure 1, the system 100 may perform prescriptive analysis on database containers in the NoSQL database 150, to optimize the capacity configurations of the database containers. In other examples, the system 100 may perform the prescriptive analysis on database containers within one or more NoSQL databases. The database containers may be located in the same or different databases, servers, and/or geographical regions.

Figure 2 shows an example multiple layer CCO stack 200. The NoSQL database capacity configuration optimization system described herein uses the CCO stack 200 to prescribe recommendations for database container capacity configuration optimization based on analysis of data associated with the database container. The capacity configuration optimization analysis performed by the system may include, for example, updating the capacity mode of the database container and rightsizing the provisioned capacity throughput on the database container. Further, the system may include in the analysis utilization tracking data and consumption metrics data of the database container. The consumption metrics data may, for example, include data of cost metrics of the database container. The utilization tracking data may include, for example, the capacity utilization data of individual database containers. The capacity utilization data may include, for example, consumed read capacity units, consumed write capacity units, consumed replicated write capacity units and consumed transactional requests.

In this example, the CCO stack 200 may include a data staging layer 205, an input layer 210, a configuration layer 220, a prescriptive engine layer 250, a presentation layer 260, and a data export layer 270. The CCO stack 200 may include a multiple-layer computing structure of hardware and software that may provide prescriptive analytical recommendations (e.g., capacity configuration optimization prescriptions) through data analysis.

A stack may refer to a multi-layered computer architecture that defines the interaction of software and hardware resources at the multiple layers. The Open Systems Interconnection (OSI) model is an example of a stack-type architecture. The layers of a stack may pass data and hardware resources among themselves to facilitate data processing. As one example, for the CCO stack 200, the data staging layer 205 may provide the input layer 210 with storage resources to store ingested data within a database or other data structure. In some implementations, the data staging layer 205 may be deployed as a cloud-based database platform with the capability to process mass data. In an example, an underlying Big Data Lake of the database platform is capable of ingesting data from heterogeneous data sources such as Secured Storage, Hadoop file systems (HDFS) connections, relational databases, flat files, and other data operations. Hence, the data staging layer 205 may provide a hardware resource, e.g., memory resources, to the input layer 210. Accordingly, the multiple-layer stack architecture of the CCO stack 200 may improve the functioning of the underlying hardware.

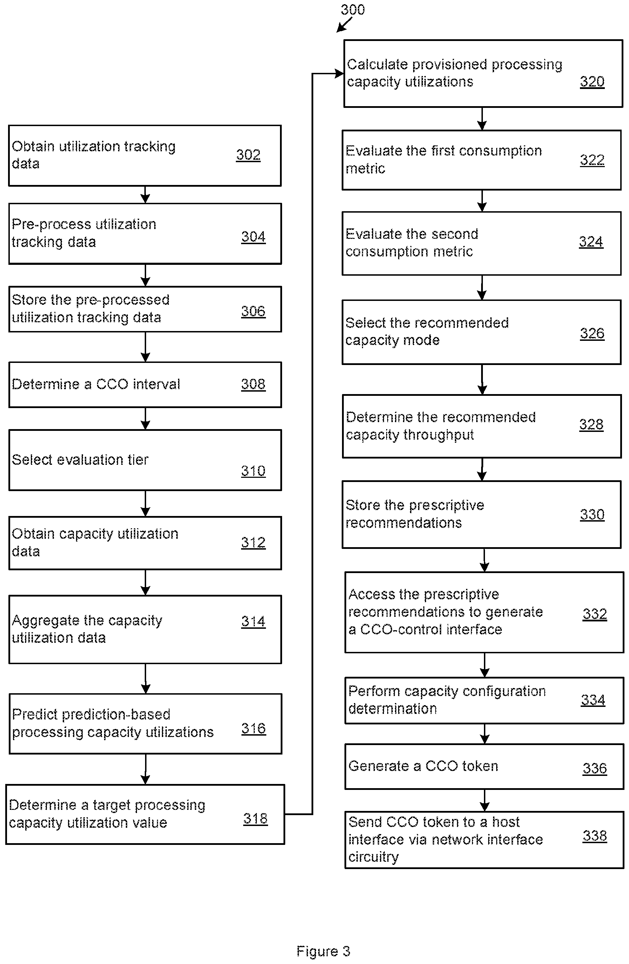

In the following, reference is made to Figure 2 and the corresponding example CCO logic (CCOL) 300 in Figure 3. The logical features of CCOL 300 may be implemented in various orders and combinations. For example, in a first implementation, one or more features may be omitted or reordered with respect to a second implementation. At the input layer 210 of the CCO stack 200, the CCOL 300 may obtain utilization tracking data 212 of the database container as the input data (302). In some cases, the utilization tracking data 212 may be received via the network interface circuitry (e.g., the network interface circuitry 812, discussed below). The utilization tracking data 212 may be accessed at least in part, e.g., via the network interface circuitry 812, from data sources 211, which may include, database container utilization files, database container expenditure files, or other data sources.

Optionally, at the input layer 210, the CCOL 300 may pre-process the utilization tracking data 212 (304). In some implementations, the pre-processing may include data transformations on the utilization tracking data 212 such as z transformation, log transformation and data minimization. Alternatively or additionally, the pre-processing may treat missing value data in the utilization tracking data 212. For example, the missing value data is treated to map NULL to 0. Alternatively or additionally, the pre-processing may converting measurement units such as date time conversion, currency conversions, numerical conversions, and other data type conversions.

The CCOL 300 then may, at the input layer 210, store the pre-processed utilization tracking data 215 via a memory operation at the data staging layer 205 (306). In some implementations, the pre-processed utilization tracking data 215 may be indexed to speed up query processing.

At the configuration layer 220, the CCOL 300 may determine a CCO interval 221 to optimize capacity configuration of the database container (308). For example, the CCO interval 221 may be predetermined to be periodical or non-periodical (e.g., hourly, six hours, daily, weekly, month-date, and yearly). Alternatively or in addition, in another example, the CCO interval 221 may be selected by the system operator.

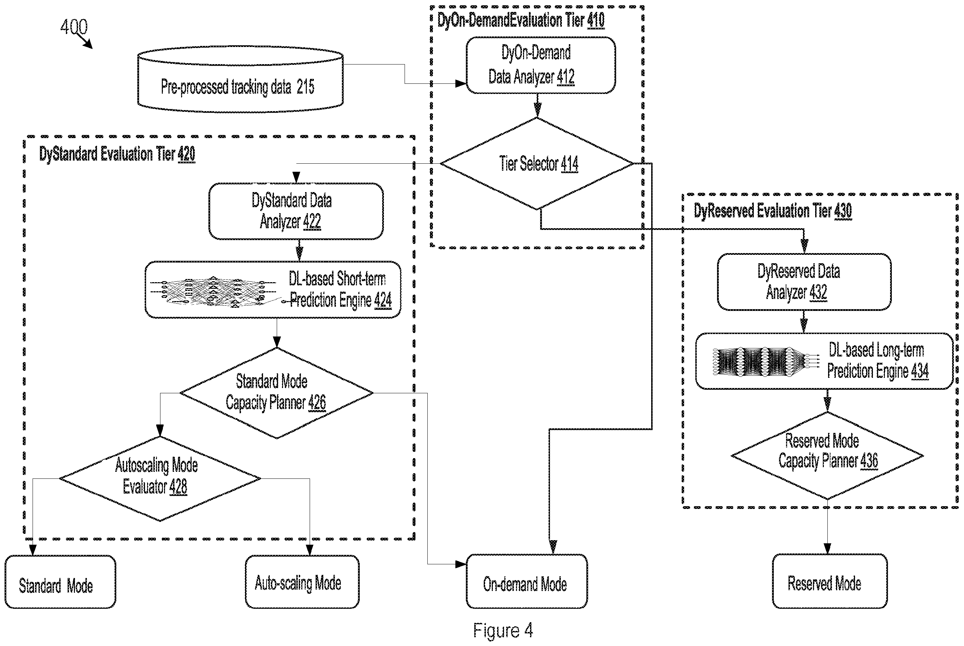

At the prescriptive engine layer 250, the CCOL 300 may analyze the database container to generate capacity configuration optimization recommendations. Figure 4 is a block diagram example of a NoSQL database capacity configuration optimization system 400 illustrating execution implementation for the prescriptive engine layer 250 of the CCO stack 200. Example operation of the CCOL 300 at the prescriptive engine layer 250 will be described with reference to the system 400 of Figure 4.

The execution of the system 400 may include a DyOn-Demand evaluation Tier 410, a DyStandard evaluation tier 420, and a DyReserved Evaluation Tier 430. The DyOn-Demand evaluation Tier 410 may include a DyOn-Demand data analyzer 412 and a tier selector 414. The DyStandard evaluation tier 420 may include a DyStandard data analyzer 422, a prediction engine 424, a standard mode capacity planner 426, and an auto-scaling mode evaluator 428. The DyReserved evaluation tier 430 may include a DyReserved data analyze 432, a prediction engine 434, and a reserved mode capacity planner 436.

At the DyOn-Demand data analyzer 412, the CCOL 300 may obtain a utilization time length and a utilization data missing coefficient for the database container via the data-staging layer 205. The utilization time length may be represented by, for example, days and the utilization data missing coefficient may represent the percentage of days for which the utilization data is missing over the utilization time length. Where the utilization time length of the database container is less than a first utilization time threshold, e.g., 30 days, the CCOL 300 may directly determine that the recommended capacity mode for the database container is the on-demand mode. Accordingly, the recommended capacity throughput, e.g. read capacity unit and write capacity unit, may be set to zero.

At the tier selector 414, where the utilization time length of the database container is longer than the first utilization time threshold, e.g., 30 days and the utilization data missing coefficient is less than 10%, the CCOL 300 may select to proceed to the DyStandard evaluation tier 420 or the DyReserved Evaluation Tier 430 based on the utilization time length. As an example, where the utilization time length is greater than a second utilization time length threshold, e.g., one or two years, the CCOL 300 may select to proceed to the DyReserved Evaluation Tier 430. Where the utilization time length is greater than the first utilization time threshold but less than the second utilization time threshold, the CCOL 300 may select to proceed to DyStandard evaluation tier 420.

Where the CCOL 300 proceeds to the DyReserved Evaluation Tier 430, the CCOL 300 may, for example, select one of the reserved mode and the on-demand mode as the recommended capacity mode of the database container based on the prescriptive analysis as described as follows. At the DyReserved Data Analyzer 432, the CCOL 300 may obtain capacity utilization data of the database container for each unit time from the pre-processed utilization tracking data 215 via the data-staging layer 205 (312). The unit time may be, for example, second, minute, and hour. Then, the CCOL 300 may aggregate the capacity utilization data based on a predetermined time granularity (314). At the DyReserved Evaluation Tier 430, the time granularity may be predetermined to be, for example, daily. As such, the capacity utilization data may be aggregated from, for example, minute-level granularity to day-level granularity.

At the prediction engine 434, for each of subintervals with the day-level granularity over the CCO interval, e.g., for each day over the next 365 days, the CCOL 300 predicts, based on the aggregated capacity utilization data, respective prediction-based processing capacity utilizations for the database container with the prediction engine 434 (316). As the utilization time length of the database container is greater than the second utilization time length threshold, e.g., one or two years, the CCOL 300 may determine the prediction engine 434 as a long-term deep learning model. The long-term deep learning model may be trained to predict the prediction-based processing capacity utilizations for the database container based on the historical capacity utilization data with such longer utilization time length. The respective prediction-based processing capacity utilizations may be stored in, for example, a vector data structure.

At the reserved mode capacity planner 436, the CCOL 300 may determine a target processing capacity utilization value from the prediction-based processing capacity utilizations (318). In an implementation, the target processing capacity utilization value is greater than processing capacity utilization values of a predetermined portion of the prediction-based processing capacity utilizations. For example, the CCOL 300 may determine the target processing capacity utilization value as a Nth percentile processing capacity utilization value of the prediction-based processing capacity utilizations and calculate the Nth processing capacity utilization value. In some implementations, the Nth percentile is greater than or equal to 95th percentile. Here, the percentile value of the prediction-based processing capacity utilizations may present deeper insights into the distribution of the predicted utilization curve of the database container as opposed to the average value of the prediction-based processing capacity utilizations.

For example, in the prediction-based processing capacity utilizations of the database container, 95% of the predicted capacity utilizations are 10 RUs while 5% of the predicted capacity utilizations are 100 RUs. As such, the 95th percentile predicted capacity utilization value is 10 RUs while the averaged predicted capacity utilization value 14.5 RUs. Thus, the 95th percentile predicted capacity utilization value is more closely reflect the processing capacity to be utilized over the CCO interval.

Then, the CCOL 300 may calculate respective provisioned processing capacity utilizations for each of the subintervals within the CCO interval based on the target processing capacity utilization value (320). For example, the CCOL 300 may calculate each of the respective provisioned processing capacity utilizations as being equal to the target processing capacity utilization value. For another example, the CCOL 300 may add a predetermined yearly processing capacity utilization buffer to the target processing capacity utilization value to obtain a buffered processing capacity utilization value. The predetermined yearly processing capacity utilization buffer may be buffer value for annual prediction. Then, the CCOL 300 may calculate each of the respective provisioned processing capacity utilizations as being equal to the buffered processing capacity utilization value. The respective provisioned processing capacity utilizations may be stored in, for example, a vector data structure.

Subsequently, the CCOL 300 selects one of the first capacity mode or the second capacity mode as the recommended capacity mode based on the prediction-based processing capacity utilizations and the provisioned processing capacity utilizations. The CCOL 300 evaluates the consumption metrics of the database container under different capacity modes based on the respective prediction-based processing capacity utilizations and the respective provisioned processing capacity utilizations and select the recommended capacity mode based on the evaluated consumption metrics.

The CCOL 300 evaluates a first consumption metric of the database container under a first capacity mode based on the respective prediction-based processing capacity utilizations and the respective provisioned processing capacity utilizations (322). At the DyReserved evaluation tier 430, as the utilization time length of the database container is greater than the second utilization time length threshold, e.g. a predetermined number of years, the first capacity mode is set to the reserved mode. In an implementation, the CCOL 300 may calculate respective provisioned unutilized processing capacity values for each of the subintervals over the CCO interval as the respective provisioned processing capacity utilizations minus the respective prediction-based processing capacity utilizations. Then, the CCOL 300 may sum up the respective provisioned unutilized processing capacity values to get a total provisioned unutilized processing capacity value. The CCOL 300 may sum up values of the respective prediction-based processing capacity utilizations to get a total provisioned utilized processing capacity value. Subsequently, the CCOL 300 may calculate the first consumption metric of the database container, for example, by multiplying the sum of the total provisioned unutilized processing capacity value and the total provisioned utilized processing capacity value by the capacity unit cost under the reserved mode.

Then, the CCOL 300 may evaluate a second consumption metric of the database container under a second capacity mode based on the respective prediction-based processing capacity utilizations (324). In an implementation, the second capacity mode is the on-demand mode by default. For example, the CCOL 300 may sum up values of the respective prediction-based processing capacity utilizations to get the total provisioned utilized processing capacity value, and then calculate the second consumption metric of the database container by multiplying the total provisioned utilized processing capacity value by the capacity unit cost under the on-demand mode.

Continuing at the reserved mode capacity planner 436, the CCOL 300 may select one of the first capacity mode, i.e., the reserved mode, and the second capacity mode, i.e. the on-demand mode, as the recommended capacity mode based on the first consumption metric and the second consumption metric (326). In an implementation, if the difference value of the second consumption metric minus the first consumption metric is greater than a predetermined difference threshold, e.g., 50-100, the CCOL 300 may select the reserved mode as the recommended capacity mode. Otherwise, the CCOL 300 may select the on-demand mode as the recommended capacity mode.

Subsequently, the CCOL 300 may determine a recommended capacity throughput for the database container based on the recommended capacity mode (328). For example, where the recommended capacity mode is the reserved mode, the CCOL 300 may determine the recommended capacity throughput to be the target processing capacity utilization value plus a predetermined yearly processing capacity utilization buffer. Where the recommended capacity mode is the on-demand mode, the CCOL 300 may determine the recommended capacity throughput to be zero because the database container does not need to be provisioned with any capacity throughput in on-demand mode.

Where the CCOL 300 proceeds to the DyStandard evaluation tier 420, the CCOL 300 may, for example, select one of the standard mode and the on-demand mode as the recommended capacity mode of the database container based on the prescriptive analysis as described as follows. Similar to the DyReserved data analyzer 432, at the DyStandard data analyzer 422, the CCOL 300 may obtain capacity utilization data of the database container for each unit time from the pre-processed utilization tracking data 215 via the data-staging layer 205 (312). The unit time may be, for example, second, minute, and hour. Then, the CCOL 300 may aggregate the capacity utilization data based on a predetermined time granularity (314). At the DyStandard evaluation tier 420, the time granularity may be predetermined to be, for example, hourly. As such, the capacity utilization data may be aggregated from, for example, minute-level granularity to hour-level granularity.

At the prediction engine 424, for each of subintervals with the hour-level granularity over the CCO interval, e.g., for each hour over the next 24 hours, the CCOL 300 may predict, based on the aggregated capacity utilization data, respective prediction-based processing capacity utilizations for the database container with the prediction engine 424 (316). As the utilization time length of the database container is less than or equal to the second utilization time length threshold, e.g., a predetermined number of years, the CCOL 300 may determine the prediction engine 424 as a short-term deep learning model. The short-term deep learning model may be trained to predict the respective prediction-based processing capacity utilizations for the database container based on the historical capacity utilization data with such shorter utilization time length. The respective prediction-based processing capacity utilizations may be stored in, for example, a vector data structure.

At the standard mode capacity planner 426, the CCOL 300 may determine a target processing capacity utilization value from the prediction-based processing capacity utilizations predicted at the prediction engine 424 (318). In an implementation, the target processing capacity utilization value is greater than processing capacity utilization values of a predetermined portion of the prediction-based processing capacity utilizations. For example, the CCOL 300 may determine the target processing capacity utilization value as a Nth percentile processing capacity utilization value of the prediction-based processing capacity utilizations and calculate the Nth processing capacity utilization value. In some implementations, the Nth percentile is greater than or equal to 95th percentile.

Then, the CCOL 300 may calculate respective provisioned processing capacity utilizations for each of the subintervals over the CCO interval based on the target processing capacity utilization value (320). For example, the CCOL 300 may calculate each of the respective provisioned processing capacity utilizations as being equal to the target processing capacity utilization value. For another example, the CCOL 300 may add a predetermined daily processing capacity utilization buffer to the target processing capacity utilization value to obtain a buffered processing capacity utilization value. The predetermined daily processing capacity utilization buffer may be buffer value for per day prediction, which may be less than the buffer value for annual prediction used at the reserved mode capacity planner 436. Then, the CCOL 300 may calculate each of the respective provisioned processing capacity utilizations as being equal to the buffered processing capacity utilization value. The respective provisioned processing capacity utilizations may be stored in, for example, a vector data structure.

Subsequently, the CCOL 300 evaluates a first consumption metric of the database container under a first capacity mode based on the respective prediction-based processing capacity utilizations and the respective provisioned processing capacity utilizations (322). At the DyStandard evaluation tier 420, as the utilization time length of the database container is less than or equal to the second utilization time length threshold, e.g. a predetermined number of years, the first capacity mode is set to the standard mode. In an implementation, the CCOL 300 may calculate respective provisioned unutilized processing capacity values for each of the subintervals over the CCO interval, e.g., each hour over the next 24 hours, as the respective provisioned processing capacity utilizations minus the respective prediction-based processing capacity utilizations. Then, the CCOL 300 may sum up the respective provisioned unutilized processing capacity values to get a total provisioned unutilized processing capacity value. The CCOL 300 may sum up values of the respective prediction-based processing capacity utilizations to get a total provisioned utilized processing capacity value. Subsequently, the CCOL 300 may calculate the first consumption metric of the database container, for example, by multiplying the sum of the total provisioned unutilized processing capacity value and the total provisioned utilized processing capacity value by the capacity unit cost under the standard mode.

Then, the CCOL 300 evaluates a second consumption metric of the database container under a second capacity mode based on the respective prediction-based processing capacity utilizations (324). In an implementation, the second capacity mode is the on-demand mode by default. For example, the CCOL 300 may sum up values of the respective prediction-based processing capacity utilizations to get the total provisioned utilized processing capacity value, and then calculate the second consumption metric of the database container by multiplying the total provisioned utilized processing capacity value by the capacity unit cost under the on-demand mode.

Continuing at the standard mode capacity planner 426, the CCOL 300 may select one of the first capacity mode, i.e., the standard mode, and the second capacity mode, i.e. the on-demand mode, as the recommended capacity mode based on the first consumption metric and the second consumption metric (326). In an implementation, if the difference value of the second consumption metric minus the first consumption metric is greater than a predetermined difference threshold, e.g., 5-10, the CCOL 300 may select the standard mode as the recommended capacity mode. Otherwise, the CCOL 300 may select the on-demand mode as the recommended capacity mode.

Subsequently, the CCOL 300 may determine a recommended capacity throughput for the database container based on the recommended capacity mode (328). For example, where the recommended capacity mode is the reserved mode, the CCOL 300 may determine the recommended capacity throughput to be the target processing capacity utilization value plus a predetermined daily processing capacity utilization buffer. Where the recommended capacity mode is the on-demand mode, the CCOL 300 may determine the recommended capacity throughput to be zero because the database container does not need to be provisioned with any capacity throughput in on-demand mode.

Optionally, where the standard mode is selected as the recommended capacity mode, the CCOL 300 may evaluate whether to update the recommended capacity mode to the auto-scaling mode at the auto-scaling mode evaluator 428. In an implementation, the CCOL 300 may calculate a consumption ratio based on the recommended capacity throughput determined at standard mode capacity planner 426 and an alarm consumption metric. Where the consumption ratio is greater than or equal to a cutoff ratio, the CCOL 300 may update the recommended capacity mode to the auto-scaling mode. As an example, the CCOL 300 may calculate the consumption metric for consuming recommended capacity throughput by multiplying the recommended capacity throughput by the capacity unit cost under the standard mode. Then the CCOL 300 may calculate the ratio of the consumption metric to the alarm consumption metric. The alarm consumption metric may be preconfigured, for example, by the system operator at the configuration layer 220. If the ratio is greater than or equal to a predetermined cutoff ratio such as 100:1, the CCOL 300 may select the auto-scaling mode as the recommended capacity mode. Otherwise, the recommended capacity mode is still the standard mode.

Optionally, the CCOL 300 may generate a consumption optimization preview for the database container based on the recommended capacity mode and the recommended capacity throughput. The consumption optimization preview may indicate potential cost savings because of optimization recommendations of the capacity mode and the capacity throughput. For example, where the recommended capacity mode is the reserved mode, the CCOL 300 may calculate a reserved consumption metric by multiplying the recommended capacity throughput by the capacity unit cost in the reserved mode and calculate an on-demand consumption metric by multiplying the recommended capacity throughput by the capacity unit cost in the on-demand mode. Then, the CCOL 300 may calculate the potential cost savings as the on-demand consumption metric minus the reserved consumption metric.

For another example, where the recommended capacity mode is the standard mode, the CCOL 300 may calculate a standard consumption metric by multiplying the recommended capacity throughput by the capacity unit cost in the standard mode and calculate an on-demand consumption metric by multiplying the recommended capacity throughput by the capacity unit cost in the on-demand mode. Then, the CCOL 300 may calculate the potential cost savings as the on-demand consumption metric minus the standard consumption metric.

Generally, the more the potential savings are, the higher priority that the database container should be optimized. For example, for the database containers undergoing the capacity configuration optimization analysis, the CCOL 300 may sort their potential savings in descending order and calculate cumulative saving percentages incrementally for each of the database containers in the descending order.

As an example, if the cumulative savings percentage for a database container is less than or equal to 65%, the optimization priority for the database container is set to be high. If the cumulative savings percentage for a database container is less than or equal to 85% but greater than 65%, the optimization priority for the database container is set to be medium. If the cumulative savings percentage for a database container is greater than 85%, the optimization priority for the database container is set to be low.

For purpose of illustration, the CCOL 300 may execute the example routines in Table 1 to implement functions of the prescriptive engine layer 250 in individual modules of the execution environment 400.

| Table 1: Example Routine for prescribing capacity configuration optimization | | | |
|---|---|---|---|
| | | Description | |
| Example Routine | ***# Tier selection logic*** | | |
| | *Logic tier selected =* | | |
| | | *if (historical_data > required_data_reserved) then run (DyReserved Evaluation Tier) else if (historical_ data > required_data_standard) then run (DyStandard Evaluation Tier)* | |
| | *else run (DyOn-Demand Evaluation Tier)* | | |
| | | | |
| | **# *DyOn-Demand Evaluation Tier Logic*** | | |
| | | | |
| | *Capacity mode selected (initial monitoring period) = 'On-Demand'* | | |
| | *Capacity bandwidth (initial monitoring period) = 0 units* | | |
| | | | |
| | *where,* | | |
| | *historical_data* = *size of available data period* | | |
| | *required_data_standard= initial monitoring period of a database table to qualify DyStandard Evaluation Tier logic, e.g., 30 days* | | |
| | *required_data_reserved = initial monitoring period of a database table to qualify DyReserved Evaluation Tier logic, e.g., 1-2 years* | | |
| | | | |

| | | | |
|---|---|---|---|
| | | ***# DyReserved Evaluation Tier Logic*** | |
| | | | |
| | | /*predicted_series_yearly> = DL_prediction_func(*/*historical_series_yearly>)* | |
| | | *aggregated_yearly = aggr_func(*/*predicted_series_yearly>)* | |
| | | *capacity_provisioned_yearly* = *aggregated_yearly + β_yearly* /*provisioned_series_yearly>* = /*1...N> * capacity_provisionect_yearly* /*provisioned_unutilized_yearly> =* /*provisioned_series_yearly> -* /*predicted_series_yearly> total_provisioned_unutilized_yearly = sum_func(*/*provisioned_unutilized_yearly>)* | |
| | | *total_provisioned_utilized_yearly = sum_func(*/*predicted_series_yearly>)* | |
| | | *R_cost_yearly = (total_provisioned_utilized_yearly * γ + total_provisioned_unutilized_yearly * γ)* | |
| | | *OD_cost_yearly = total_provisioned_utilized_yearly * δ* | |
| | | *capacity mode selected (yearly) <= if (OD_cost_yearly > R_cost_yearly + $yearly) then "Reserved" else "On-demand"* | |
| | | *capacity bandwidth (yearly) <= if (OD_cost_yearly > R_cost_yearly + $yearly) then capacity_provisioned_yearly else 0* | |
| | | | |
| | | *where,* | |
| | | /*historical_series_yearly>* = *historical utilization data for a period H, e.g., 365 days* /*predicted_series_yearly>* = *predicted data for a period F, per year aggregated_yearly = aggregated value*/*estimate from predicted temporal data, e.g., 99^{th} or 95^{th} percentile* | |
| | | *β_yearly = buffer value for annual prediction* | |
| | | *capacity_provisioned_yearly = yearly provisioned value, sum of aggregate and buffer* /*1...N> = one's vector with length equals to* /*predicted_series_yearly>, N indicates the dimension* | |
| | | /*provisioned series yearly> = product of one's vector and yearly provisioned value lprovisioned_unutilized_yearly> = the vector having list of unutilized capacity values for each period, with reference to provisioned capacity for entire prediction window F total_provisioned_utilized_yearly = total sum of utilized quantity for the entire prediction window F* | |
| | | *total_provisioned_unutilized_yearly = total sum of unutilized quantity for the entire prediction window F* | |
| | | *γ = reserved capacity price* | |
| | | *δ = on-demand capacity price* | |
| | | *R_cost_yearly = total costs incurred for reserved capacity for entire period F* | |
| | | *O_cost_yearly = total costs incurred for on-demand capacity for entire period F* | |
| | | *$yearly = savings threshold, e.g., 50-100$* | |
| | | *aggr_func, sum_func, DL_prediction_func = aggregate, sum and deep learning-based prediction function respectively* | |
| | | | |
| | | *Note:* | |
| | | | • *The historical data H may be 1-2 years or more* |
| | | | • *The prediction window F usually may span across a year* |
| | | | • *Variables represented in the formula above in the form of "*/ *>" are vector data types* |
| | | | |
| | | **# *DyStandard Evaluation Tier Logic*** | |
| | | | |
| | | /*predicted_series_daily> = DL_prediction_func(*/*historical_series-daily>)* | |
| | | *aggregated_daily = aggr_func(*/*predicted_series_daily>)* | |
| | | *capacity_provisioned_daily* = *aggregated_daily + β daily* | |
| | | /*provisioned_series_daily>* = /*1...M> * capacity_provisioned_daily* /*provisioned_unutilized_daily> =* /*provisioned_series_daily>* - /*predicted_series_daily> total_provisioned_unutilized_daily = sum_func(*/*provisioned_unutilized_daily>)* | |
| | | *total_provisioned_utilized_daily = sum_func(*/*predicted_series-daily>)* | |
| | | *S_cost_daily = (total_provisioned_utilized_daily * ε + total_provisioned_unutilized_daily * ε)* | |
| | | *OD_cost_daily = total_provisioned_utilized_daily * δ* | |

| | | | |
|---|---|---|---|
| | *capacity mode selected (daily) <= if (OD_cost_daily > S_cost_daily + $daily) then "Standard" else "On-demand"* | | |
| | *capacity bandwidth (daily) <= if (OD_cost_daily > S_cost_daily + $daily) then capacity_provisioned_daily else 0* | | |
| | | | |
| | *where,* | | |
| | /*historical_series_daily>* = *historical utilization data for a period h, e.g.* 24 *hours* /*predicted_series_daily>* = *predicted data for a period f, per day* | | |
| | *aggregated_daily = aggregated value*/*estimate from predicted temporal data, e.g., 99^{th} or 95^{th} percentile* | | |
| | *β_daily = buffer value for per day prediction, it tends to be lower than the yearly buffer capacity_provisioned_daily = daily provisioned value, sum of aggregate and buffer* /*1...M> = one's vector with length equals to* /*predicted_series_daily>, 'M' indicates dimension* | | |
| | /*provisioned_series_daily> = product of one's vector and daily provisioned value* /*provisioned_unutilized_daily> = the vector having list of unutilized capacity values for each period, with reference to provisioned capacity for entire prediction window f total_provisioned_utilized_daily = total sum of utilized quantity for the entire prediction window f* | | |
| | *total_provisioned_unutilized_daily = total sum of unutilized quantity for the entire prediction window f* | | |
| | *ε = standard capacity price* | | |
| | *δ = on-demand capacity price* | | |
| | *$daily = savings threshold, e.g., 5-10$* | | |
| | *S_cost_daily = Total costs incurred for standard capacity for entire period f* | | |
| | *OD_cost_daily = Total costs incurred for on-demand capacity for entire period f aggr_func, sum func, DL_prediction_func = statistical aggregation, sum and deep-learning based prediction function respectively* | | |
| | | | |
| | *Note:* | | |
| | | • | *The historical data h may be 30 days or more* |
| | | • | *The prediction window f may span across a day* |
| | | • | *Variables represented in the formula above in the form of "*/ *>" are vector data types* |
| | | | |
| | ***# Autoscaling Mode Evaluation Logic*** | | |
| | | | |
| | *If (capacity_mode_selected == "Standard") then check_autoscaling()* | | |
| | *check_autoscaling()* | | |
| | | | |
| | | | *{If ((capacity_bandwidth * ε)* / *cloud_watch_alarm_costs >= cutoff_ratio):* |
| | | | *then: capacity_mode_selected <= "Autoscaling"* |
| | | | *else: capacity_mode_selected <= "Standard"}* |
| | | | |
| | Where, | | |
| | *ε = standard capacity price* | | |
| | *cutoff_ratio can be defined by user, e.g., 100:* 1 | | |

Optionally, upon determining to execute a capacity configuration optimization for the database container, the CCOL 300 may output its optimization recommendations as a CCO token 252. The prescriptive engine layer 250 may send the CCO token 252 to a host interface for management of the database containers. For example, the CCO token may include a logic reconfiguring the capacity configuration of the database container, which may include updating the capacity mode and rightsizing the capacity throughput provisioned for the database container. The host interface may include an Application Programming Interface (API) for reconfiguring the capacity configuration of a database container and execute the CCO token with the API to reconfigure the capacity configuration of the database container.

Optionally, the CCOL 300 may execute the similar operations at the prescriptive engine layer 250 to output respective capacity configuration optimization recommendations for each of the database containers undergoing the capacity configuration optimization analysis. Upon the capacity configuration optimization recommendations are output, the CCOL 300 then may, at the prescriptive engine layer 250, store the capacity configuration optimization recommendations via a memory operation at the data staging layer 205 (330).

Now referring to the presentation layer 260 in Figure 2, where the CCOL 300 may access the optimization recommendations from the prescriptive engine layer 250, e.g., via data staging layer 205 memory operations to generate a CCO-control interface 266 including a CCO-window presentation 268 (332).

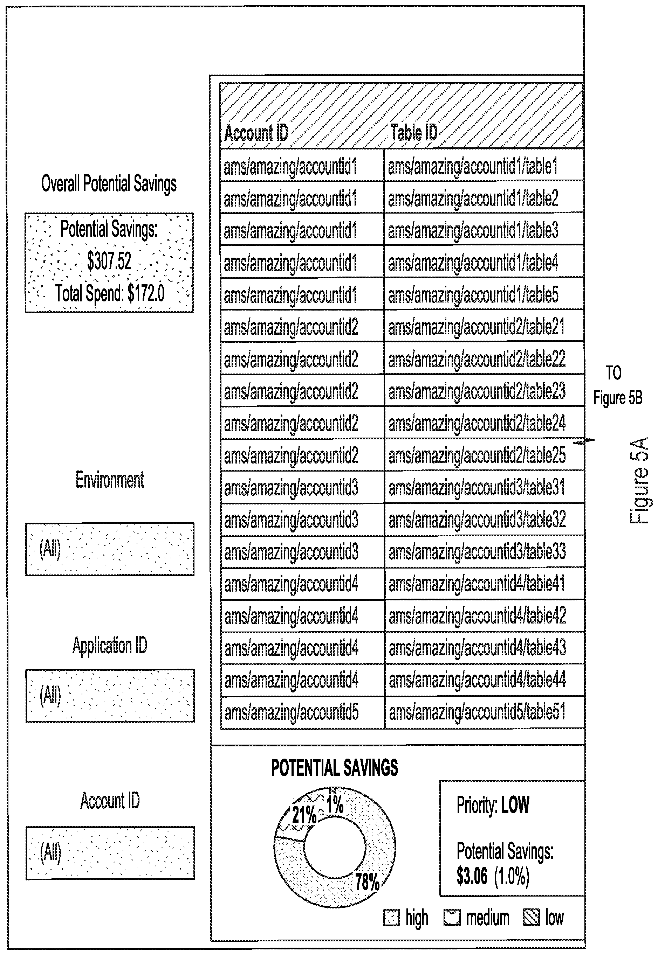

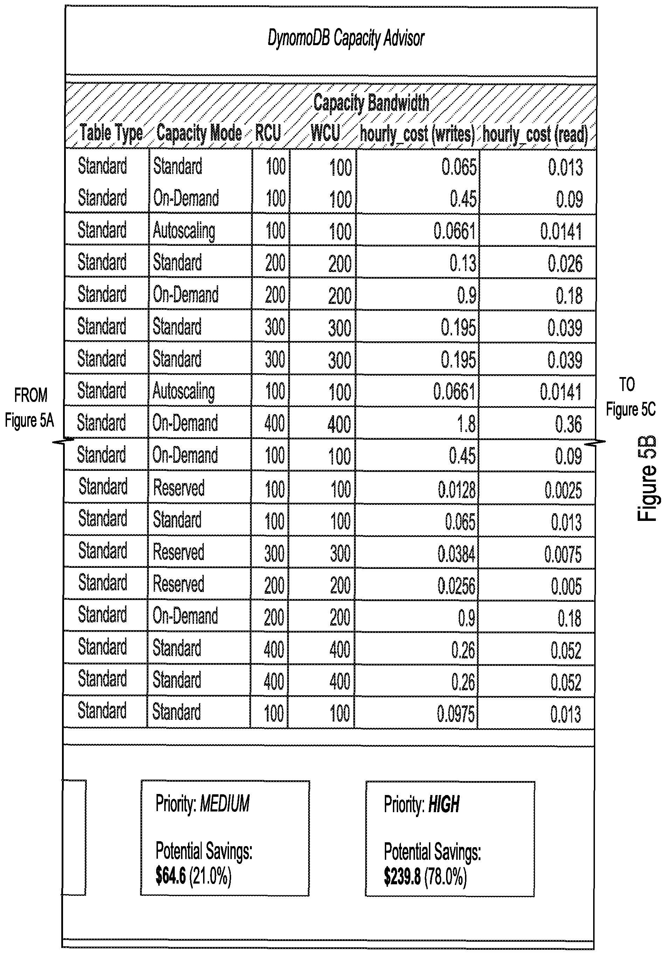

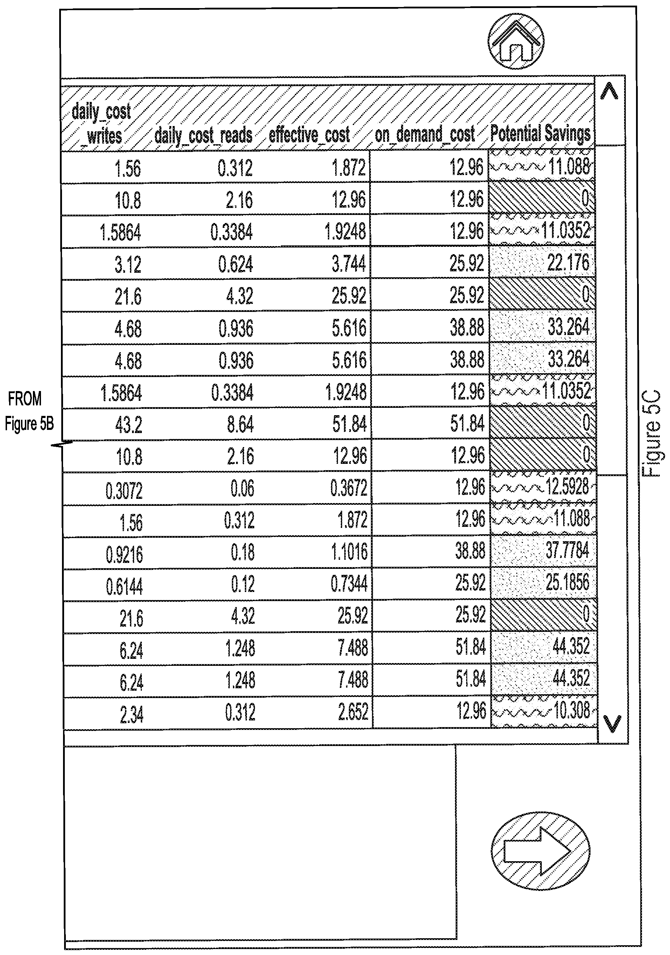

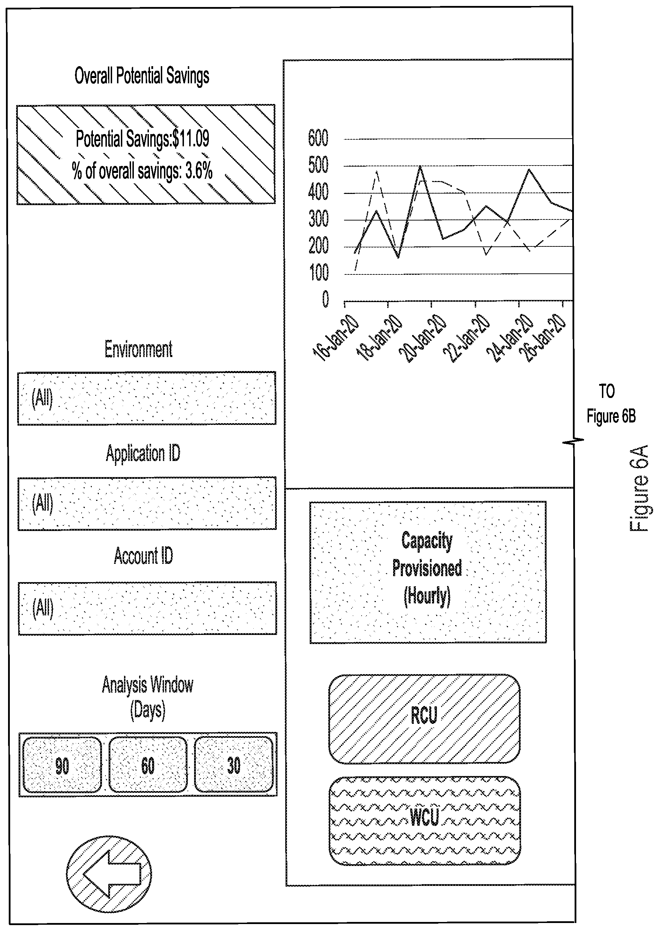

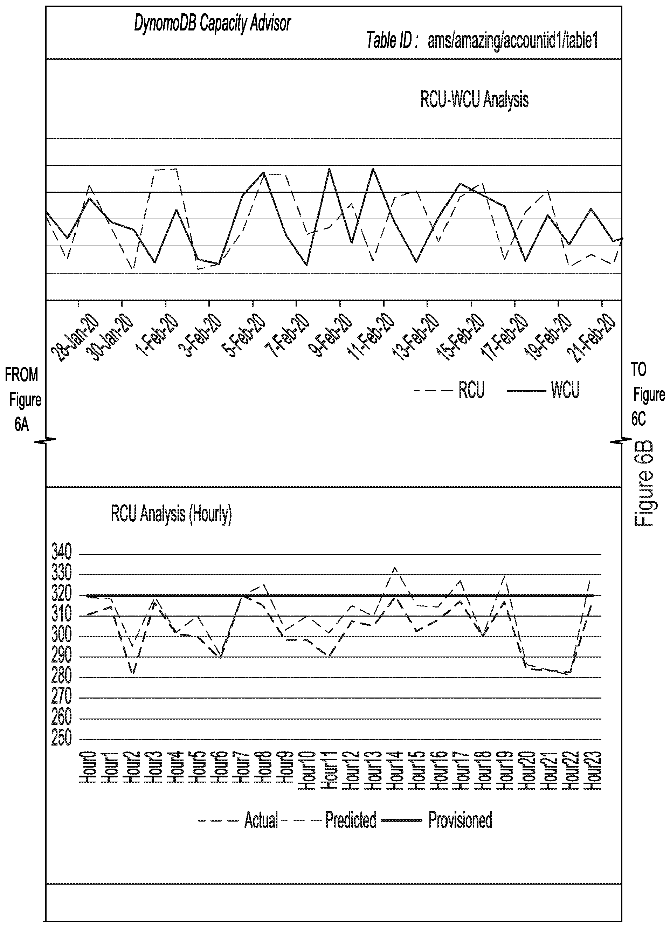

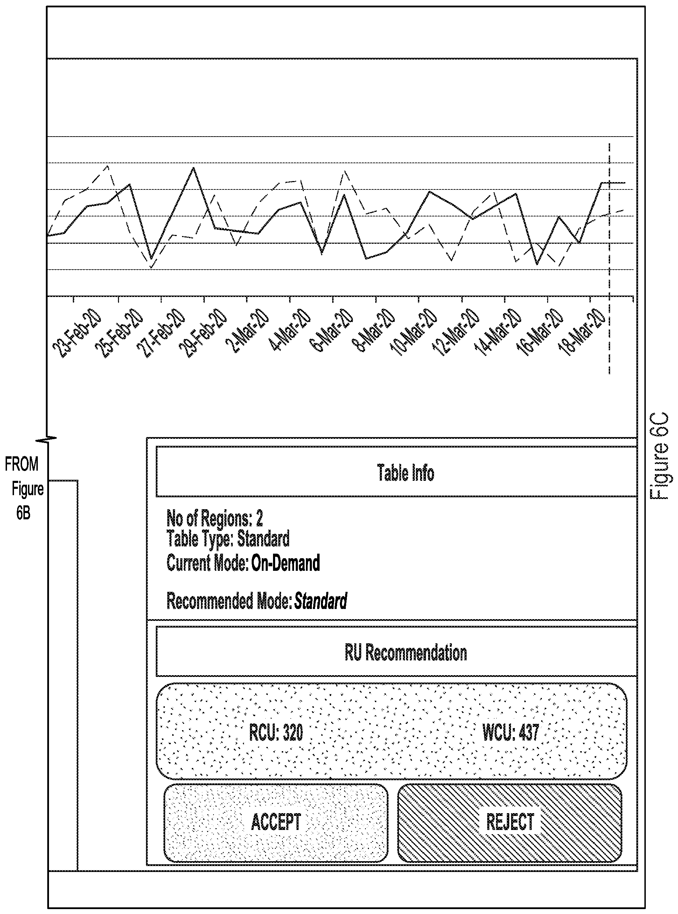

The CCO-window presentation 268 may include data and/or selectable options related to the optimization recommendations. In an implementation, the CCO-window presentation 268 may be configured to display prescriptive analysis information with regard to the capacity configuration optimization. For example, Figures 5A-5C illustrate an example of the capacity configuration optimization analysis preview by database container including, for example, the capacity mode and capacity throughput recommendations and potential savings. Figures 5A-5C also illustrate an example of a capacity configuration optimization priority for the database containers in accordance with their potential savings. Figures 6A-6C illustrates an example of a detailed capacity configuration optimization analysis for a specific database container including, for example, the current capacity mode, the recommended capacity mode, the historical provisioned/consumed capacity throughputs including the read capacity unit and the write capacity unit, the predicted capacity throughputs preview for the database container, and the recommended read capacity unit and write capacity unit.

Further, an option to forward a CCO token, to a host interface for capacity configuration optimization in accord the recommendations may be included as one of the selectable options available through the CCO-window presentation 268. Alternatively or additionally, an option to configure the CCO interval used for the capacity configuration optimization analysis may be included as a portion of theselectable options available through the CCO-window, as illustrated in Figures 6A-6C.

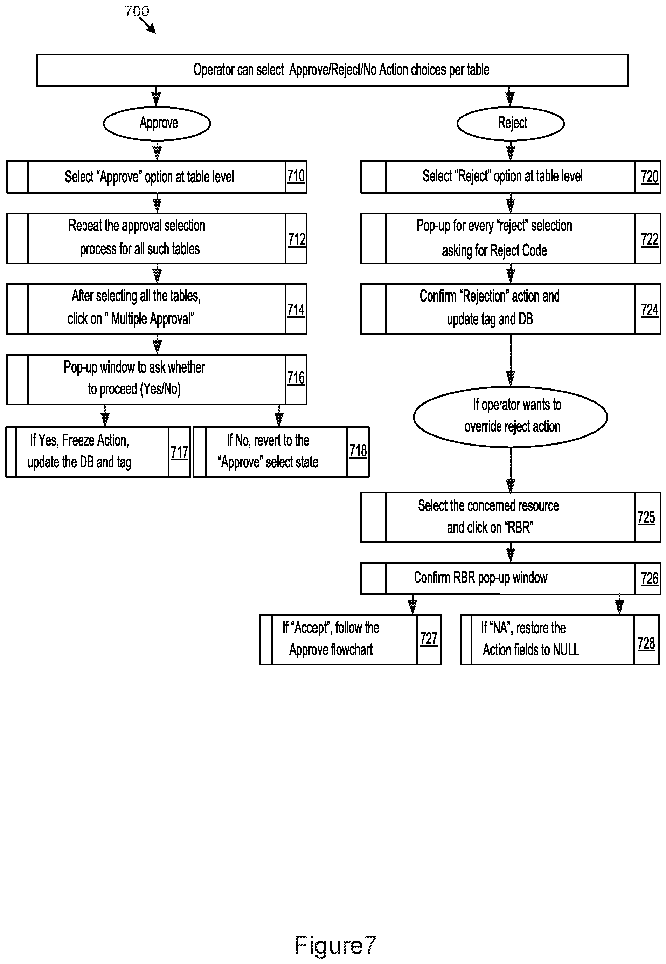

Additionally or alternatively, the CCO-window presentation may include an option to approve/reject one or more (or all of) the capacity configuration optimization recommendations. Figure 7 shows an example interaction logic between input signals received from an operator and the CCO-window presentation 268 to approve/reject the displayed optimization recommendations. Specifically, the operator may take approval/rejection action per database container in the CCO-window presentation 268.

For example, the CCO-window presentation 268 may include "Approve," "Reject," and "No action" options for each of the database containers such as database tables. The operator may select "Approve" option at container level (710) and repeat the "Approve" selection for other tables (712). After finishing the option selections for all the tables, the operator may click on "Multiple Approval" option (714). As response, the CCO-window presentation 268 may pop-up a window to ask the operator to confirm to proceed with "Yes" and/or "No" options (716). If the operator selects "Yes" option, the CCO-window presentation 268 may freeze action in the window and update the operator's inputs in the background storage storing the inputs (717). If the operator selects "No" option, the CCO-window presentation 268 may revert to the "Approve" selection state (718).

The operator may also select "Reject" option at container level (720). For each "Reject" selection, the CCO-window presentation 268 may pop up a window to ask for a rejection code justifying the rejection (722). Where the rejection code is verified, the CCO-window presentation 268 may confirm the rejection action and update the operator's inputs in the background storage (724).

Optionally, if the operator would like to override his/her previous rejection action, the operator may select the concerned database containers and click "RBR" (Roll Back Required) option (725). As response, the CCO-window presentation 268 may pop up a window to confirm the "RBR" selection with "Accept" and "NA" (Not Accept) options (726). If the operator selects "Accept" option, the CCO-window presentation 268 may enable to select the "Approve" option for the concerned database containers (727). If the operator selects "NA", the CCO-window presentation 268 may nullify all the selection actions with respect to the concerned database containers (728).

Through the interaction with the operator via the CCO-control interface, the CCOL 300 may perform a capacity configuration determination on whether to execute, based on the recommended capacity configuration, a capacity configuration optimization for the database container (334). Where the CCOL 300 determines to execute the capacity configuration optimization, the CCOL 300 may generate a CCO token 252 based on the recommended capacity configuration (336). The CCO token may, for example, include logic reconfiguring the capacity configuration for the target database container with the recommended capacity mode and the recommended capacity throughput.

After generation of the CCO token 252, the CCOL 300 may initiate deployment of the CCO token 252 by sending the CCO token 252 to the network interface circuitry (e.g., the network interface circuitry 812) and causing the network interface circuitry to send the CCO token 252 to a host interface for capacity configuration optimization (338). For example, services such as Amazon^{®} Web Services (AWS), Cloudian^{®}, Microsoft^{®} AZURE, or other cloud computing services, may maintain host interfaces (e.g., web interfaces, application programming interfaces, or other interfaces) by which cloud user/system operator may manage the database containers.

In some cases, the CCOL 300 may initiate deployment via the data export layer 270. The data export layer 270 may format the reservation matrix in one or more formats for transfer. For example, the data export layer 270 may support format translation to java script object notation (JSON), extensible markup language (XML), comma separated value (CSV), Tableau Workbook (TBWX), hypertext markup language (HTML) or other formats. The data export layer 270 may also support transfer of the CCO token in one or more states, such as flat file transfers, streaming transfers, web service access, internet protocol transfers, or other transfers. Additionally or alternatively, the CCOL 300 may initiate deployment via the prescriptive engine layer 250 through direct transfer, direct network access, or other non-export transfer.

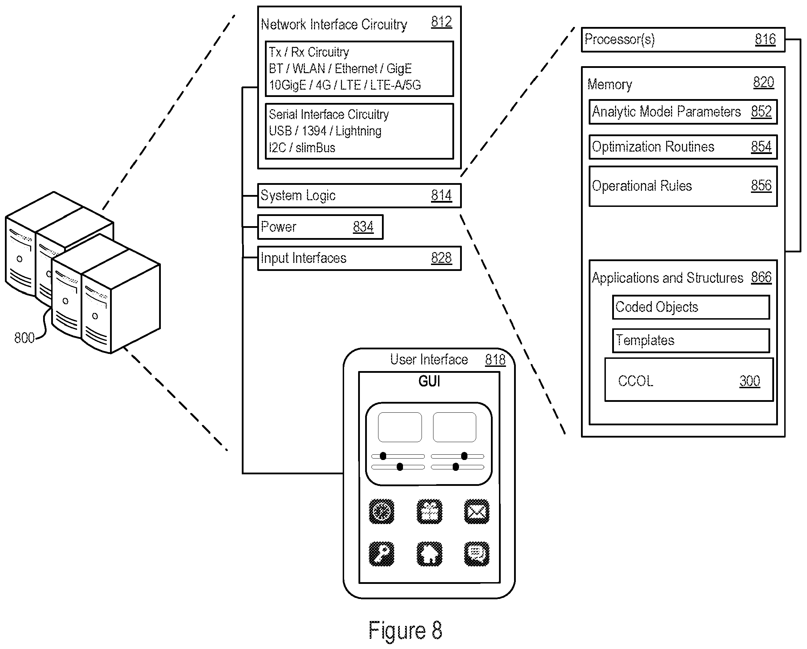

Figure 8 shows an example system execution environment 800 for the CCO stack 200 described above. The execution environment 800 may include system logic 814 to support execution of the multiple layers of CCO stack 200 described above. The system logic may include processors 816, memory 820, and/or other circuitry.

The memory 820 may include analytic model parameters 852, optimization routines 854, and operational rules 856. The memory 820 may further include applications and structures 866, for example, coded objects, machine instructions, templates, or other structures to support pre-processing the utilization tracking data, predicting database container capacity utilizations, selecting the recommended capacity mode, or other tasks described herein. The applications and structures 866 may implement at least part of the CCOL 300.

The execution environment 800 may also include network interface circuitry 812, which may support wireless, e.g. Bluetooth, Wi-Fi, WLAN, cellular (4G, LTE/A, 5G), and/or wired, Ethernet, Gigabit Ethernet, optical networking protocols. The network interface circuitry 812 may also include serial interfaces, such as universal serial bus (USB), serial ATA, IEEE 1394, lighting port, I²C, slimBus, or other serial interfaces. The network interface circuitry 812 may be used to support and/or implement remote operation of the CCO-control interface 266. The execution environment 800 may include power functions 834 and various input interfaces 828. The execution environment may also include a user interface 818 that may include human-to-machine interface devices and/or graphical user interfaces (GUI). The user interface 818 may be used to support and/or implement local operation of the CCO-control interface 266. In various implementations, the system logic 814 may be distributed over one or more physical servers, be implemented as one or more virtual machines, be implemented in container environments such as Cloud Foundry or Docker, and/or be implemented in Serverless (functions as-a-Service) environments.

In some cases, the execution environment 800 may be a specially defined computational system deployed in a cloud platform. In some cases, the parameters defining the execution environment may be specified in a manifest for cloud deployment. The manifest may be used by an operator to requisition cloud based hardware resources, and then deploy the software components, for example, the CCO stack 200, of the execution environment onto the hardware resources. In some cases, a manifest may be stored as a preference file such as a YAML (yet another mark-up language), JSON, or other preference file type. Additionally or alternatively, the manifest may include custom scripts to implement the CCO stack 200 in a serverless environment. Therein, a multiple-tier framework is described. The framework describes a series of the serverless tasks controlled via scripts. The serverless tasks overlap in execution to maintain continuity across the tasks. The computational task in divided into chunks that may be handled by individual serverless tasks. Accordingly, a complex analytic process, such as those describe in this disclosure, may be divided into chunks and executed over one or more overlapping serverless tasks.

The methods, devices, processing, circuitry, and logic described above may be implemented in many different ways and in many different combinations of hardware and software. For example, all or parts of the system, including the network interface circuitry and the optimization circuitry, may be circuitry that includes an instruction processor, such as a Central Processing Unit (CPU), microcontroller, or a microprocessor; or as an Application Specific Integrated Circuit (ASIC), Programmable Logic Device (PLD), or Field Programmable Gate Array (FPGA); or as circuitry that includes discrete logic or other circuit components, including analog circuit components, digital circuit components or both; or any combination thereof. The circuitry may include discrete interconnected hardware components or may be combined on a single integrated circuit die, distributed among multiple integrated circuit dies, or implemented in a Multiple Chip Module (MCM) of multiple integrated circuit dies in a common package, as examples.

Accordingly, the circuitry may store or access instructions for execution, or may implement its functionality in hardware alone. The instructions may be stored in a tangible database container medium that is other than a transitory signal, such as a flash memory, a Random Access Memory (RAM), a Read Only Memory (ROM), an Erasable Programmable Read Only Memory (EPROM); or on a magnetic or optical disc, such as a Compact Disc Read Only Memory (CDROM), Hard Disk Drive (HDD), or other magnetic or optical disk; or in or on another machine-readable medium. A product, such as a computer program product, may include a database container medium and instructions stored in or on the medium, and the instructions when executed by the circuitry in a device may cause the device to implement any of the processing described above or illustrated in the drawings.

Implementations of the system may be distributed. For instance, the circuitry may include multiple distinct system components, such as multiple processors and memories, and may span multiple distributed processing systems. Parameters, databases, and other data structures may be separately stored and managed, may be incorporated into a single memory or database, may be logically and physically organized in many different ways, and may be implemented in many different ways. Example implementations include linked lists, program variables, hash tables, arrays, records (e.g., database records), objects, and implicit storage mechanisms. Instructions may form parts (e.g., subroutines or other code sections) of a single program, may form multiple separate programs, may be distributed across multiple memories and processors, and may be implemented in many different ways. Example implementations include stand-alone programs, and as part of a library, such as a shared library like a Dynamic Link Library (DLL). The library, for example, may contain shared data and one or more shared programs that include instructions that perform any of the processing described above or illustrated in the drawings, when executed by the circuitry.

## Claims

1. A system (100) comprising:
network interface circuitry (11) configured to:
receive (302) utilization tracking data for a database container in a NoSQL database (150), the database container configured with a processing capacity configuration, the processing capacity configuration comprising one of a plurality of predetermined capacity modes, each of the capacity modes representing a different manner to provision processing capacity on the database container; and
send (338) a capacity configuration optimization (CCO) token to a host interface (130), the host interface configured to execute the CCO token to reconfigure the database container with a recommended capacity mode;
optimization circuitry (120) in data communication with the network interface circuitry, the optimization circuitry configured to execute a CCO stack (122), the CCO stack executable to:
at a prescriptive engine layer of the CCO stack:
obtain (312) capacity utilization data from the utilization tracking data;
aggregate (314) the capacity utilization data according to a predetermined time granularity;
for each of a plurality of subintervals of a CCO interval, predict, with a prediction engine, based on the aggregated capacity utilization data, respective prediction-based processing capacity utilizations for the database container, each of the plurality of subintervals having the predetermined time granularity;
determine (318) a target processing capacity utilization value from the prediction-based processing capacity utilizations;
calculate (320) respective provisioned processing capacity utilizations for each of the subintervals over the CCO interval based on the target processing capacity utilization value;
select (326) one of the capacity modes as the recommended capacity mode based on the prediction-based processing capacity utilizations and the provisioned processing capacity utilizations;
generate (336) the CCO token based on the recommended capacity mode; and
send (338) the CCO token to the host interface via the network interface circuitry;.
wherein the optimization circuitry is configured to:
evaluate (322) a first consumption metric of the database container under a first capacity mode included in the capacity modes, the first consumption metric being evaluated based on the prediction-based processing capacity utilizations and the provisioned processing capacity utilizations;
evaluate (324) a second consumption metric of the database container under a second capacity mode included in the capacity modes, the second consumption metric being evaluated based on the prediction-based processing capacity utilizations; and
select (326) one of the first capacity mode or the second capacity mode as the recommended capacity mode based on the first consumption metric and the second consumption metric.

2. The system of claim 1, wherein the processing capacity configuration further comprises a capacity throughput, the capacity throughput representing a processing capacity provisioned on the database container to process data per unit time, the optimization circuitry is further configured to:
determine a recommended capacity throughput based on the recommended capacity mode.

3. The system of any one of claims 1 to 2, wherein the capacity modes comprise:
an on-demand mode that dynamically provisions the database container with the capacity throughput based on workloads of the database container;
a standard mode that provisions the database container with a first specified capacity throughput;
an auto-scaling mode that provisions the database container with a second specified capacity throughput and automatically increases or decreases the second specified capacity throughput in response to a predetermined condition being satisfied; or
a reserved mode that reserves a specified capacity throughput for the database
container over at least a predetermined period of time.

4. The system of any one of claims 1 to 3, wherein the optimization circuitry is configured to:
add a processing capacity utilization buffer to the target processing capacity utilization value to obtain a buffered processing capacity utilization value;
determine the recommended capacity throughput as the buffered processing capacity utilization value in response to the recommended capacity mode being the standard mode or the reserved mode; and
determine the recommended capacity throughput as zero in response to the recommended capacity mode being the on-demand mode.

5. The system of claim 3 or of claim 4 when dependent on claim 3, wherein the optimization circuitry is further configured to:
in response to the recommended capacity mode being the standard mode,
calculate a consumption ratio based on the recommended capacity throughput and an alarm consumption metric indicative of excessive usage of the capacity throughput; and
update the recommended capacity mode to the auto-scaling mode in response to the consumption ratio being greater than or equal to a cutoff ratio.

6. The system of any one of claims 3 to 5, wherein the optimization circuitry is further configured to:
generate a consumption optimization preview for the database container based on the recommended capacity mode and the recommended capacity throughput, the consumption optimization preview indicating a decrease of a consumption metric of the database container due to the capacity configuration optimization; and
determine a priority to execute the capacity configuration optimization for the database container based on the consumption optimization preview.

7. The system of any one of claims 3 to 6, wherein the optimization circuitry is further configured to:
obtain a utilization time length for the database container; and
determine the first capacity mode and the second capacity mode based on the utilization time length.

8. The system of claim 7, wherein the optimization circuitry is configured to:
in response to the utilization time length being greater than a first utilization time length threshold and less than or equal to a second utilization time length threshold, determine the first capacity mode as the standard mode and the second capacity mode as the on-demand mode; and
in response to the utilization time length being greater than the second utilization time length threshold, determine the first capacity mode as the reserved mode and the second capacity mode as the on-demand mode;
wherein, optionally:
(a) the optimization circuitry is configured to select the on-demand mode as the recommended capacity mode in response to the utilization time length being less than or equal to the first utilization time length threshold; and/or
(b) the optimization circuitry is configured to select the first capacity mode as the recommended capacity mode in response to the second consumption metric being a predetermined consumption metric threshold greater than the first consumption metric.

9. The system of claim 8, wherein the optimization circuitry is further configured to:
execute the prediction engine as a long-term deep learning model to predict respective prediction-based processing capacity utilizations in response to the utilization time length being greater than the second utilization time length threshold; and
execute the prediction engine as a short-term deep learning model to predict respective prediction-based processing capacity utilizations in response to the utilization time length being greater than a first utilization time length threshold and less than or equal to the second utilization time length threshold;
wherein the long-term deep learning model and the short-term deep learning model are trained to predict the prediction-based processing capacity utilizations for the database container.

10. The system of any one of claims 1 to 9, wherein the optimization circuitry is configured to:
add a predetermined processing capacity utilization buffer to the target processing capacity utilization value to obtain a buffered processing capacity utilization value; and
calculate each of the respective provisioned processing capacity utilizations as being equal to the buffered processing capacity utilization value.

11. The system of any one of claims 1 to 10, wherein the target processing capacity utilization value is greater than processing capacity utilization values of a predetermined portion of the prediction-based processing capacity utilizations.
wherein, optionally, the optimization circuitry is further configured to determine the target processing capacity utilization value as a Nth percentile processing capacity utilization value of the prediction-based processing capacity utilizations, wherein the Nth percentile is greater than or equal to a 95th percentile.

12. The system of any one of claims 1 to 11, wherein:
the CCO stack is further executable to, at a presentation layer of the CCO stack, generate a CCO control interface including a CCO-window presentation; and
the CCO-window presentation includes a selectable option to execute the capacity configuration optimization;
wherein, optionally:
(a) the CCO-window presentation further includes a selectable option to reject execution of the capacity configuration optimization; and/or
(b) the CCO-window presentation is configured to display multiple capacity configuration optimizations, each of the multiple capacity configuration optimizations for a corresponding database container.

13. A method (300) comprising:
receiving (302), at network interface circuitry (110), utilization tracking data for a database container in a NoSQL database (150), the database container configured with a processing capacity configuration, the processing capacity configuration comprising one of a plurality of predetermined capacity modes, each of the plurality of capacity modes representing a different manner to provision processing capacity on the database container;
executing a capacity configuration optimization (CCO) stack (122) at optimization circuitry (120), the optimization circuitry in data communication with the network interface circuitry, wherein executing the CCO stack comprises:
obtaining (312), at a prescriptive engine layer (250) of the CCO stack, capacity utilization data from the utilization tracking data;
aggregating (314), at the prescriptive engine layer, the capacity utilization data according to a predetermined time granularity;
for each of a plurality of subintervals, having the predetermined time granularity, over a CCO interval, predicting (316) respective prediction-based processing capacity utilizations for the database container, the respective prediction-based processing capacity utilizations predicted with a prediction engine, at the prescriptive engine layer, based on the aggregated capacity utilization data;
determining (318), at the prescriptive engine layer, a target processing capacity utilization value from the prediction-based processing capacity utilizations;
calculating (320), at the prescriptive engine layer, respective provisioned processing capacity utilizations for each of the subintervals over the CCO interval based on the target processing capacity utilization value;
evaluating (322), at the prescriptive engine layer, a first consumption metric of the database container under a first capacity mode included in the capacity modes, the first consumption metric being evaluated based on the prediction-based processing capacity utilizations and the provisioned processing capacity utilizations;
evaluating (324), at the prescriptive engine layer, a second consumption metric of the database container under a second capacity mode included in the capacity modes, the second consumption metric being evaluated based on the prediction-based processing capacity utilizations;
selecting (326), at the prescriptive engine layer, one of the plurality of capacity modes as a recommended capacity mode based on the prediction-based processing capacity utilizations and the provisioned processing capacity utilizations, said selecting comprising selecting one of the first capacity mode or the second capacity mode as the recommended capacity mode based on the first consumption metric and the second consumption metric;
generating (336), at the prescriptive engine layer, a CCO token based on the recommended capacity mode; and
sending (338), via the network interface circuitry, the CCO token to a host interface (130) configured to execute the CCO token to reconfigure the database container with the recommended capacity mode.

14. A product comprising a machine-readable medium storing instructions, the instructions configured to, when executed, cause a machine to carry out the method of claim 13.

## Patentansprüche

1. System (100), das umfasst:
eine Netzwerk-Schnittstellenschaltung (11), die ausgelegt ist zum:
Empfangen (302) von Nutzungs-Nachverfolgungsdaten für einen Datenbank-Container in einer NoSQL-Datenbank (150), wobei der Datenbank-Container mit einer Verarbeitungsleistungs-Konfiguration konfiguriert ist, wobei die Verarbeitungsleistungs-Konfiguration einen aus einer Vielzahl von vorher festgelegten Leistungsmodi umfasst, wobei jeder der Leistungsmodi eine unterschiedliche Weise zur Bereitstellung einer Verarbeitungsleistung auf dem Datenbank-Container darstellt; und
Senden (338) eines Leistungs-Konfigurationsoptimierungs(CCO)-Tokens an eine Host-Schnittstelle (130), wobei die Host-Schnittstelle zur Ausführung des CCO-Tokens ausgelegt ist, um den Datenbank-Container mit einem empfohlenen Leistungsmodus neu zu konfigurieren;
eine Optimierungsschaltung (120) in Datenkommunikation mit der Netzwerk-Schnittstellenschaltung, wobei die Optimierungsschaltung zur Ausführung eines CCO-Stacks (122) ausgelegt ist, wobei der CCO-Stack ausführbar ist zum:
an einer vorgeschriebenen Engine-Schicht des CCO-Stacks:
Erhalten (312) von Leistungs-Nutzungsdaten aus den Nutzungs-Nachverfolgungsdaten;
Ansammeln (314) der Leistungs-Nutzungsdaten gemäß einer vorher festgelegten Zeitgranularität;
für jedes einer Vielzahl von Teilintervallen eines CCO-Intervalls, Vorhersagen, mit einer Vorhersage-Engine, basierend auf den angesammelten Leistungs-Nutzungsdaten, jeweiliger Vorhersage-basierter Verarbeitungsleistungsnutzungen für den Datenbank-Container, wobei jedes der Vielzahl von Teilintervallen die vorher festgelegte Zeitgranularität aufweist;
Bestimmen (318) eines Ziel-Verarbeitungsleistungsnutzungs-Werts von den Vorhersage-basierten Verarbeitungsleistungsnutzungen;
Berechnen (320) jeweiliger bereitgestellter Verarbeitungsleistungsnutzungen für jedes der Teilintervalle über das CCO-Intervall basierend auf dem Ziel-Verarbeitungsleistungsnutzungs-Wert;
Auswählen (326) einen der Leistungsmodi als den empfohlenen Leistungsmodus basierend auf den Vorhersage-basierten Verarbeitungsleistungsnutzungen und den bereitgestellten Verarbeitungsleistungsnutzungen;
Erzeugen (336) des CCO-Tokens basierend auf dem empfohlenen Leistungsmodus; und
Senden (338) des CCO-Tokens an die Host-Schnittstelle über die Netzwerk-Schnittstellenschaltung;
wobei die Optimierungsschaltung ausgelegt ist zum:
Bewerten (322) einer ersten Verbrauchsmetrik des Datenbank-Containers bei einem in den Leistungsmodi enthaltenen ersten Leistungsmodus, wobei die erste Verbrauchsmetrik basierend auf den Vorhersage-basierten Verarbeitungsleistungsnutzungen und den bereitgestellten Verarbeitungsleistungsnutzungen bewertet wird;
Bewerten (324) einer zweiten Verbrauchsmetrik des Datenbank-Containers bei einem in den Leistungsmodi enthaltenen zweiten Leistungsmodus, wobei die zweite Verbrauchsmetrik basierend auf den Vorhersage-basierten Verarbeitungsleistungsnutzungen bewertet wird; und
Auswählen (326) entweder des ersten Leistungsmodus oder des zweiten Leistungsmodus als den empfohlenen Leistungsmodus basierend auf der ersten Verbrauchsmetrik und der zweiten Verbrauchsmetrik.

2. System nach Anspruch 1, wobei die Verarbeitungsleistungs-Konfiguration des Weiteren einen Leistungsdurchsatz umfasst, wobei der Leistungsdurchsatz eine auf dem Datenbank-Container bereitgestellte Verarbeitungsleistung zur Verarbeitung von Daten pro Zeiteinheit darstellt, wobei die Optimierungsschaltung des Weiteren ausgelegt ist zur:
Bestimmung eines empfohlenen Leistungsdurchsatzes basierend auf dem empfohlenen Leistungsmodus.

3. System nach einem der Ansprüche 1 bis 2, wobei die Leistungsmodi umfassen:
einen On-Demand- bzw. Abrufmodus, der den Datenbank-Container dynamisch mit dem Leistungsdurchsatz basierend auf Auslastungen des Datenbank-Containers versorgt;
einen Standardmodus, der den Datenbank-Container mit einem ersten bestimmten Leistungsdurchsatz versorgt;
einen Autoskalierungsmodus, der den Datenbank-Container mit einem zweiten bestimmten Leistungsdurchsatz versorgt und den zweiten bestimmten Leistungsdurchsatz ansprechend darauf automatisch erhöht oder verringert, dass eine vorher festgelegte Voraussetzung erfüllt ist; oder
einen Reserviert-Modus, der einen bestimmten Leistungsdurchsatz für den Datenbank-Container über zumindest eine vorher festgelegte Zeitdauer reserviert.

4. System nach einem der Ansprüche 1 bis 3, wobei die Optimierungsschaltung ausgelegt ist zum:
Hinzufügen eines Verarbeitungsleistungsnutzungs-Pufferspeichers zu dem Ziel-Verarbeitungsleistungsnutzungs-Wert zum Erhalt eines gepufferten Verarbeitungsleistungsnutzungs-Werts;
Bestimmen des empfohlenen Leistungsdurchsatzes als der gepufferte Verarbeitungsleistungsnutzungs-Wert ansprechend darauf, dass der empfohlene Leistungsmodus der Standardmodus oder der Reserviert-Modus ist; und
Bestimmen des empfohlenen Leistungsdurchsatzes als Null ansprechend darauf, dass der empfohlene Leistungsmodus der On-Demand-Modus ist.

5. System nach Anspruch 3 oder Anspruch 4, wenn abhängig von Anspruch 3, wobei die Optimierungsschaltung des Weiteren ausgelegt ist zum:
ansprechend darauf, dass der empfohlene Leistungsmodus der Standardmodus ist,
Berechnen eines Verbrauchsverhältnisses basierend auf dem empfohlenen Leistungsdurchsatz und einer Warn-Verbrauchsmetrik, die eine exzessive Nutzung des Leistungsdurchsatzes anzeigt; und
Aktualisieren des empfohlenen Leistungsdurchsatzes in den Autoskalierungs-Modus ansprechend darauf, dass das Verbrauchsverhältnis größer oder gleich einem Abschaltungsverhältnis ist.

6. System nach einem der Ansprüche 3 bis 5, wobei die Optimierungsschaltung des Weiteren ausgelegt ist zum:
Erzeugen einer Verbrauchsoptimierungs-Vorschau für den Datenbank-Container basierend auf dem empfohlenen Leistungsmodus und dem empfohlenen Leistungsdurchsatz, wobei die Verbrauchsoptimierungs-Vorschau eine Verringerung einer Verbrauchsmetrik des Datenbank-Containers aufgrund der Leistungskonfigurations-Optimierung anzeigt; und
Bestimmen einer Priorität zur Ausführung der Leistungskonfigurations-Optimierung für den Datenbank-Container basierend auf der Verbrauchsoptimierungs-Vorschau.

7. System nach einem der Ansprüche 3 bis 6, wobei die Optimierungsschaltung des Weiteren ausgelegt ist zum:
Erhalten einer Nutzungs-Zeitlänge für den Datenbank-Container; und
Bestimmen des ersten Leistungsmodus und des zweiten Leistungsmodus basierend auf der Nutzungs-Zeitlänge.

8. System nach Anspruch 7, wobei die Optimierungsschaltung ausgelegt ist zum:
ansprechend darauf, dass die Nutzungs-Zeitlänge größer ist als ein erster Nutzungs-Zeitlängen-Schwellenwert und geringer oder gleich einem zweitem Nutzungs-Zeitlängen-Schwellenwert ist, Bestimmen des ersten Leistungsmodus als den Standardmodus und des zweiten Leistungsmodus als den On-Demand-Modus; und
ansprechend darauf, dass die Nutzungs-Zeitlänge größer ist als der zweite Nutzungs-Zeitlängen-Schwellenwert, Bestimmen des ersten Leistungsmodus als den Reserviert-Modus und des zweiten Leistungsmodus als den On-Demand-Modus, wobei optional:
(a) die Optimierungsschaltung ausgelegt ist, um den On-Demand-Modus als den empfohlenen Leistungsmodus ansprechend darauf auszuwählen, dass die Nutzungs-Zeitlänge geringer oder gleich dem ersten Nutzungs-Zeitlängen-Schwellenwert ist; und/oder
(b) die Optimierungsschaltung ausgelegt ist, um den ersten Leistungsmodus als den empfohlenen Leistungsmodus ansprechend darauf auszuwählen, dass die zweite Verbrauchsmetrik ein vorher festgelegter Verbrauchsmetrik-Schwellenwert ist, der größer als die erste Verbrauchsmetrik ist.

9. System nach Anspruch 8, wobei die Optimierungsschaltung des Weiteren ausgelegt ist zum:
Ausführen der Vorhersage-Engine als ein Langzeit-Tieflern-Modell zur Vorhersage jeweiliger Vorhersage-basierter Verarbeitungsleistungsnutzungen ansprechend darauf, dass die Nutzungs-Zeitlänge größer ist als der zweite Nutzungs-Zeitlängen-Schwellenwert; und
Ausführen der Vorhersage-Engine als ein Kurzzeit-Tieflern-Modell zur Vorhersage jeweiliger Vorhersage-basierter Verarbeitungsleistungsnutzungen ansprechend darauf, dass die Nutzungs-Zeitlänge größer ist als ein erster Nutzungs-Zeitlängen-Schwellenwert und geringer oder gleich dem zweiten Nutzungs-Zeitdauer-Schwellenwert ist;
wobei das Langzeit-Tieflern-Modell und das Kurzzeit-Tieflernmodell trainiert werden, um die Vorhersage-basierten Verarbeitungsleistungsnutzungen für den Datenbank-Container vorherzusagen.

10. System nach einem der Ansprüche 1 bis 9, wobei die Optimierungsschaltung ausgelegt ist zum:
Hinzufügen eines vorher festgelegten Verarbeitungsleistungsnutzungs-Pufferspeichers zu dem Ziel-Verarbeitungsleistungsnutzungs-Wert zum Erhalt eines gepufferten Verarbeitungsleistungsnutzungs-Werts; und
Berechnen einer jeden der jeweiligen bereitgestellten Verarbeitungsleistungsnutzungen als gleich dem gepufferten Verarbeitungsleistungsnutzungs-Wert.

11. System nach einem der Ansprüche 1 bis 10, wobei der Ziel-Verarbeitungsleistungsnutzungs-Wert größer ist als Verarbeitungsleistungsnutzungs-Werte eines vorher festgelegten Teils der Vorhersage-basierten Verarbeitungsleistungsnutzungen;
wobei, optional, die Optimierungsschaltung des Weiteren ausgelegt ist, um den Ziel-Verarbeitungsleistungsnutzungs-Wert als einen N-ten Perzentil-Verarbeitungsleistungsnutzungs-Wert der Vorhersage-basierten Verarbeitungsleistungsnutzungen zu bestimmen, wobei das N-te Perzentil größer oder gleich einem 95-igsten Perzentil ist.

12. System nach einem der Ansprüche 1 bis 11, wobei:
der CCO-Stack weiter ausführbar ist, um an einer Darstellungsschicht des CCO-Stacks eine CCO-Steuerschnittstelle zu erzeugen, die eine CCO-Fensterdarstellung umfasst; und
die CCO-Fensterdarstellung eine auswählbare Option enthält, die Leistungskonfigurations-Optimierung auszuführen;
wobei optional:
(a) die CCO-Fensterdarstellung weiter eine auswählbare Option enthält, die Ausführung der Leistungskonfigurations-Optimierung abzulehnen; und/oder
(b) die CCO-Fensterdarstellung ausgelegt ist, um mehrere Leistungskonfigurations-Optimierungen anzuzeigen, wobei jede der mehreren Leistungskonfigurations-Optimierungen für einen entsprechenden Datenbank-Container ausgelegt ist.

13. Verfahren (300), das umfasst:
Empfangen (302), an einer Netzwerk-Schnittstellenschaltung (110), von Nutzungs-Nachverfolgungsdaten für einen Datenbank-Container in einer NoSQL-Datenbank (150), wobei der Datenbank-Container mit einer Verarbeitungsleistungs-Konfiguration ausgelegt ist, wobei die Verarbeitungsleistungs-Konfiguration einen Leistungsmodus aus einer Vielzahl vorher festgelegter Leistungsmodi umfasst, wobei jeder der Vielzahl von Leistungsmodi eine unterschiedliche Weise zur Bereitstellung einer Verarbeitungsleistung auf dem Datenbank-Container darstellt;
Ausführen eines Leistungskonfigurations-Optimierungs(CCO)-Stacks (122) an der Optimierungsschaltung (120), wobei die Optimierungsschaltung in Datenkommunikation mit der Netzwerk-Schnittstellenschaltung ist, wobei die Ausführung des CCO-Stacks umfasst:
Erhalten (312), an einer vorgeschriebenen Engine-Schicht (250) des CCO-Stacks, von Leistungs-Nutzungsdaten aus den Nutzungs-Nachverfolgungsdaten;
Ansammeln (314), an der vorgeschriebenen Engine-Schicht, der Leistungs-Nutzungsdaten gemäß einer vorher festgelegten Zeitgranularität;
für jedes einer Vielzahl von Teilintervallen, das die vorher festgelegte Zeitgranularität aufweist, über ein CCO-Intervall, Vorhersage (316) jeweiliger Vorhersage-basierter Verarbeitungsleistungsnutzungen für den Datenbank-Container, wobei die jeweiligen Vorhersage-basierten Verarbeitungsleistungsnutzungen mit einer Vorhersage-Engine an der vorgeschriebenen Engine-Schicht basierend auf den angesammelten Leistungs-Nutzungsdaten vorhergesagt werden;
Bestimmen (318), an der vorgeschriebenen Engine-Schicht, eines Ziel-Verarbeitungsleistungsnutzungs-Werts aus den Vorhersage-basierten Verarbeitungsleistungsnutzungen ;
Berechnen (320), an der vorgeschriebenen Engine-Schicht, jeweiliger bereitgestellter Verarbeitungsleistungsnutzungen für jedes der Teilintervalle über das CCO-Intervall basierend auf dem Ziel-Verarbeitungsleistungsnutzungs-Wert;
Bewerten (322), an der vorgeschriebenen Engine-Schicht, einer ersten Verbrauchsmetrik des Datenbank-Containers bei einem in den Leistungsmodi enthaltenen ersten Leistungsmodus, wobei die erste Verbrauchsmetrik basierend auf den Vorhersage-basierten Verarbeitungsleistungsnutzungen und den bereitgestellten Verarbeitungsleistungsnutzungen bewertet wird;
Bewerten (324), an der vorgeschriebenen Engine-Schicht, einer zweiten Verbrauchsmetrik des Datenbank-Containers bei einem in den Leistungsmodi enthaltenen zweiten Leistungsmodus, wobei die zweite Verbrauchsmetrik basierend auf den Vorhersage-basierten Verarbeitungsleistungsnutzungen bewertet wird;
Auswählen (326), an der vorgeschriebenen Engine-Schicht, einen der Vielzahl von Leistungsmodi als den empfohlenen Leistungsmodus basierend auf den Vorhersage-basierten Verarbeitungsleistungsnutzungen und den bereitgestellten Verarbeitungsleistungsnutzungen, wobei die Auswahl das Auswählen entweder des ersten Leistungsmodus oder des zweiten Leistungsmodus als den empfohlenen Leistungsmodus basierend auf der ersten Verbrauchsmetrik und der zweiten Verbrauchsmetrik umfasst;
Erzeugen (336), an der vorgeschriebenen Engine-Schicht, eines CCO-Tokens basierend auf dem empfohlenen Leistungsmodus; und
Senden (338), über die Netzwerk-Schnittstellenschaltung, des CCO-Tokens an eine Host-Schnittstelle (130), die zur Ausführung des CCO-Tokens ausgelegt ist, um den Datenbank-Container mit dem empfohlenen Leistungsmodus neu zu konfigurieren.

14. Produkt, das einen Befehle speichernden maschinenlesbaren Datenträger umfasst, wobei die Befehle, wenn diese ausgeführt werden, so ausgelegt sind, dass sie eine Maschine zur Ausführung des Verfahrens nach Anspruch 13 veranlassen.

## Revendications

1. Système (100) comprenant :
des circuits d'interface réseau (110) configurés pour :
recevoir (302) des données de suivi d'utilisation pour un conteneur de base de données dans une base de données NoSQL (150), le conteneur de base de données étant configuré avec une configuration de capacité de traitement, la configuration de capacité de traitement comprenant l'un d'une pluralité de modes de capacité prédéterminés, chacun des modes de capacité représentant une manière différente de fournir une capacité de traitement sur le conteneur de base de données ; et
envoyer (338) un jeton d'optimisation de configuration de capacité (CCO) à une interface hôte (130), l'interface hôte étant configurée pour exécuter le jeton CCO afin de reconfigurer le conteneur de base de données avec un mode de capacité recommandé ;
des circuits d'optimisation (120) en communication de données avec les circuits d'interface réseau, les circuits d'optimisation étant configurés pour exécuter une pile CCO (122), la pile CCO pouvant être exécutée pour :
au niveau d'une couche de moteur normative de la pile CCO :
obtenir (312) des données d'utilisation de capacité à partir des données de suivi d'utilisation ;
agréger (314) les données d'utilisation de capacité selon une granularité temporelle prédéterminée ;
pour chacun d'une pluralité de sous-intervalles d'un intervalle CCO, prédire, avec un moteur de prédiction, sur la base des données d'utilisation de capacité agrégées, des utilisations respectives de capacité de traitement à base de prédiction pour le conteneur de base de données, chacun de la pluralité de sous-intervalles ayant la granularité temporelle prédéterminée ;
déterminer (318) une valeur d'utilisation de capacité de traitement cible à partir des utilisations de capacité de traitement à base de prédiction ;
calculer (320) les utilisations respectives de capacité de traitement fournie pour chacun des sous-intervalles sur l'intervalle CCO sur la base de la valeur d'utilisation de capacité de traitement cible ;
sélectionner (326) l'un des modes de capacité comme étant le mode de capacité recommandé sur la base des utilisations de capacité de traitement à base de prédiction et des utilisations de capacité de traitement fournie ;
générer (336) le jeton CCO sur la base du mode de capacité recommandé ; et
envoyer (338) le jeton CCO à l'interface hôte via les circuits d'interface réseau ;
dans lequel les circuits d'optimisation sont configurés pour :
évaluer (322) une première mesure de consommation du conteneur de base de données sous un premier mode de capacité inclus dans les modes de capacité, la première mesure de consommation étant évaluée sur la base des utilisations de capacité de traitement à base de prédiction et des utilisations de capacité de traitement fournie ;
évaluer (324) une deuxième mesure de consommation du conteneur de base de données sous un deuxième mode de capacité inclus dans les modes de capacité, la deuxième mesure de consommation étant évaluée sur la base des utilisations de capacité de traitement à base de prédiction ; et
sélectionner (326) l'un du premier mode de capacité et du deuxième mode de capacité comme étant le mode de capacité recommandé sur la base de la première mesure de consommation et de la deuxième mesure de consommation.

2. Système de la revendication 1, dans lequel la configuration de capacité de traitement comprend en outre un débit de capacité, le débit de capacité représentant une capacité de traitement fournie sur le conteneur de base de données pour traiter des données par unité de temps, les circuits d'optimisation sont en outre configurés pour :
déterminer un débit de capacité recommandé sur la base du mode de capacité recommandé.

3. Système de l'une quelconque des revendications 1 et 2, dans lequel les modes de capacité comprennent :
un mode à la demande qui fournit dynamiquement au conteneur de base de données le débit de capacité sur la base des charges de travail du conteneur de base de données ;
un mode standard qui fournit au conteneur de base de données un premier débit de capacité spécifié ;
un mode de mise à l'échelle automatique qui fournit au conteneur de base de données un deuxième débit de capacité spécifié et augmente ou diminue automatiquement le deuxième débit de capacité spécifié en réponse à la satisfaction d'une condition prédéterminée ; ou
un mode réservé qui réserve un débit de capacité spécifié pour le conteneur de base de données pendant au moins une période de temps prédéterminée.

4. Système de l'une quelconque des revendications 1 à 3, dans lequel les circuits d'optimisation sont configurés pour :
ajouter une mémoire tampon d'utilisation de capacité de traitement à la valeur d'utilisation de capacité de traitement cible pour obtenir une valeur d'utilisation de capacité de traitement mise en mémoire tampon ;
déterminer le débit de capacité recommandé comme étant la valeur d'utilisation de capacité de traitement mise en mémoire tampon en réponse au fait que le mode de capacité recommandé est le mode standard ou le mode réservé ; et
déterminer le débit de capacité recommandé comme étant égal à zéro en réponse au fait que le mode de capacité recommandé est le mode à la demande.

5. Système de la revendication 3 ou de la revendication 4 lorsqu'elle dépend de la revendication 3, dans lequel les circuits d'optimisation sont en outre configurés pour :
en réponse au fait que le mode de capacité recommandé est le mode standard,
calculer un rapport de consommation sur la base du débit de capacité recommandé et une mesure de consommation d'alarme indiquant une utilisation excessive du débit de capacité ; et
mettre à jour le mode de capacité recommandé en mode de mise à l'échelle automatique en réponse au fait que le rapport de consommation est supérieur ou égal à un rapport de coupure.

6. Système de l'une quelconque des revendications 3 à 5, dans lequel les circuits d'optimisation sont en outre configurés pour :
générer une prévisualisation d'optimisation de consommation pour le conteneur de base de données sur la base du mode de capacité recommandé et du débit de capacité recommandé, la prévisualisation d'optimisation de consommation indiquant une diminution d'une mesure de consommation du conteneur de base de données en raison de l'optimisation de configuration de capacité ; et
déterminer une priorité pour exécuter l'optimisation de configuration de capacité pour le conteneur de base de données sur la base de la prévisualisation d'optimisation de consommation.

7. Système de l'une quelconque des revendications 3 à 6, dans lequel les circuits d'optimisation sont en outre configurés pour :
obtenir une durée d'utilisation pour le conteneur de base de données ; et
déterminer le premier mode de capacité et le deuxième mode de capacité sur la base de la durée d'utilisation.

8. Système de la revendication 7, dans lequel les circuits d'optimisation sont configurés pour :
en réponse au fait que la durée d'utilisation est supérieure à un premier seuil de durée d'utilisation et inférieure ou égale à un deuxième seuil de durée d'utilisation, déterminer le premier mode de capacité comme étant le mode standard et le deuxième mode de capacité comme étant le mode à la demande ; et
en réponse au fait que la durée d'utilisation est supérieure au deuxième seuil de durée d'utilisation, déterminer le premier mode de capacité comme étant le mode réservé et le deuxième mode de capacité comme étant le mode à la demande ;
dans lequel, éventuellement :
(a) les circuits d'optimisation sont configurés pour sélectionner le mode à la demande comme étant le mode de capacité recommandé en réponse au fait que la durée d'utilisation est inférieure ou égale au premier seuil de durée d'utilisation ; et/ou
(b) les circuits d'optimisation sont configurés pour sélectionner le premier mode de capacité comme étant le mode de capacité recommandé en réponse au fait que la deuxième mesure de consommation est un seuil de mesure de consommation prédéterminé supérieur à la première mesure de consommation.

9. Système de la revendication 8, dans lequel les circuits d'optimisation sont en outre configurés pour :
exécuter le moteur de prédiction en tant que modèle d'apprentissage profond à long terme pour prédire des utilisations respectives de capacité de traitement à base de prédiction en réponse au fait que la durée d'utilisation est supérieure au deuxième seuil de durée d'utilisation ; et
exécuter le moteur de prédiction en tant que modèle d'apprentissage profond à court terme pour prédire des utilisations respectives de capacité de traitement à base de prédiction en réponse au fait que la durée d'utilisation est supérieure à un premier seuil de durée d'utilisation et inférieure ou égale au deuxième seuil de durée d'utilisation ;
dans lequel le modèle d'apprentissage profond à long terme et le modèle d'apprentissage profond à court terme sont entraînés pour prédire les utilisations de capacité de traitement à base de prédiction pour le conteneur de base de données.

10. Système de l'une quelconque des revendications 1 à 9, dans lequel les circuits d'optimisation sont configurés pour :
ajouter une mémoire tampon d'utilisation de capacité de traitement prédéterminée à la valeur d'utilisation de capacité de traitement cible pour obtenir une valeur d'utilisation de capacité de traitement mise en mémoire tampon ; et
calculer chacune des utilisations respectives de capacité de traitement fournie comme étant égale à la valeur d'utilisation de capacité de traitement mise en mémoire tampon.

11. Système de l'une quelconque des revendications 1 à 10, dans lequel la valeur d'utilisation de capacité de traitement cible est supérieure aux valeurs d'utilisation de capacité de traitement d'une partie prédéterminée des utilisations de capacité de traitement à base de prédiction ;
dans lequel, facultativement, les circuits d'optimisation sont en outre configurés pour déterminer la valeur d'utilisation de capacité de traitement cible en tant que valeur d'utilisation de capacité de traitement du Nième centile des utilisations de capacité de traitement à base de prédiction, où le Nième centile est supérieur ou égal à un 95ème centile.

12. Système de l'une quelconque des revendications 1 à 11, dans lequel :
la pile CCO peut en outre être exécutée pour, au niveau d'une couche de présentation de la pile CCO, générer une interface de commande CCO comportant une présentation de fenêtre CCO ; et
la présentation de fenêtre CCO comporte une option pouvant être sélectionnée pour exécuter l'optimisation de configuration de capacité ;
dans lequel, éventuellement :
(a) la présentation de fenêtre CCO comporte en outre une option pouvant être sélectionnée pour rejeter l'exécution de l'optimisation de configuration de capacité ; et/ou
(b) la présentation de fenêtre CCO est configurée pour afficher de multiples optimisations de configuration de capacité, chacune des multiples optimisations de configuration de capacité pour un conteneur de base de données correspondant.

13. Procédé (300) comprenant les étapes consistant à :
recevoir (302), au niveau de circuits d'interface réseau (110), des données de suivi d'utilisation pour un conteneur de base de données dans une base de données NoSQL (150), le conteneur de base de données étant configuré avec une configuration de capacité de traitement, la configuration de capacité de traitement comprenant l'un d'une pluralité de modes de capacité prédéterminés, chacun de la pluralité de modes de capacité représentant une manière différente de fournir une capacité de traitement sur le conteneur de base de données ;
exécuter une pile d'optimisation de configuration de capacité (CCO) (122) au niveau de circuits d'optimisation (120), les circuits d'optimisation étant en communication de données avec les circuits d'interface réseau, où l'exécution de la pile CCO comprend :
l'obtention (312), au niveau d'une couche de moteur normative (250) de la pile CCO, de données d'utilisation de capacité à partir des données de suivi d'utilisation ;
l'agrégation (314), au niveau de la couche de moteur normative, des données d'utilisation de capacité selon une granularité temporelle prédéterminée ;
pour chacun d'une pluralité de sous-intervalles, ayant la granularité temporelle prédéterminée, sur un intervalle CCO, la prédiction (316) des utilisations respectives de capacité de traitement à base de prédiction pour le conteneur de base de données, les utilisations respectives de capacité de traitement à base de prédiction étant prédites avec un moteur de prédiction, au niveau de la couche de moteur normative, sur la base des données d'utilisation de capacité agrégées ;
la détermination (318), au niveau de la couche de moteur normative, d'une valeur d'utilisation de capacité de traitement cible à partir des utilisations de capacité de traitement à base de prédiction ;
le calcul (320), au niveau de la couche de moteur normative, des utilisations respectives de capacité de traitement fournie pour chacun des sous-intervalles sur l'intervalle CCO sur la base de la valeur d'utilisation de capacité de traitement cible ;
l'évaluation (322), au niveau de la couche de moteur normative, d'une première mesure de consommation du conteneur de base de données sous un premier mode de capacité inclus dans les modes de capacité, la première mesure de consommation étant évaluée sur la base des utilisations de capacité de traitement à base de prédiction et des utilisations de capacité de traitement fournie ;
l'évaluation (324), au niveau de la couche de moteur normative, d'une deuxième mesure de consommation du conteneur de base de données sous un deuxième mode de capacité inclus dans les modes de capacité, la deuxième mesure de consommation étant évaluée sur la base des utilisations de capacité de traitement à base de prédiction ;
la sélection (326), au niveau de la couche de moteur normative, de l'un de la pluralité de modes de capacité en tant que mode de capacité recommandé sur la base des utilisations de capacité de traitement à base de prédiction et des utilisations de capacité de traitement fournie, ladite sélection comprenant la sélection de l'un du premier mode de capacité et du deuxième mode de capacité comme étant le mode de capacité recommandé sur la base de la première mesure de consommation et de la deuxième mesure de consommation ;
la génération (336), au niveau de la couche de moteur normative, d'un jeton CCO sur la base du mode de capacité recommandé ; et
l'envoi (338), via les circuits d'interface réseau, du jeton CCO à une interface hôte (130) configurée pour exécuter le jeton CCO afin de reconfigurer le conteneur de base de données avec le mode de capacité recommandé.

14. Produit comprenant un support lisible par machine stockant des instructions, les instructions étant configurées pour, lorsqu'elles sont exécutées, amener une machine à effectuer le procédé de la revendication 13.
